# EUROPÄISCHE PATENTSCHRIFT

(11) **EP 3 769 019 B1**
(45) Veröffentlichungstag und Bekanntmachung des Hinweises auf die Patenterteilung: **10.07.2024**
(21) Anmeldenummer: 19711839.1
(22) Anmeldetag: 07.03.2019
(51) Int. Cl.: F24S 30/425, F24S 25/12

(54) **ANTRIEBSANORDNUNG**
DRIVE ARRANGEMENT
ENSEMBLE D'ENTRAÎNEMENT

(30) Priorität: 23.03.2018 DE 102018002460
(43) Veröffentlichungstag der Anmeldung: 27.01.2021
(73) Patentinhaber: Schletter International B.V., 1101 Amsterdam (NL)
(72) Erfinder: DECHANT, Gabriel, 83257 Gstadt am Chiemsee (DE)
(74) Vertreter: Thum, Bernhard
(86) Internationale Anmeldenummer: PCT/EP2019/055690
(87) Internationale Veröffentlichungsnummer: WO 2019/179781

(56) Entgegenhaltungen:
- WO-A1-2018/009634
- SU-A1- 1 305 481
- US-A1- 2011 240 007
- US-A1- 2017 149 375
- US-A1- 2018 073 773

## Beschreibung

Die vorliegende Erfindung betrifft eine Antriebsanordnung zum Antreiben wenigstens einer um eine Dreh- oder Schwenkachse verlagerbaren Abtriebseinheit.

Solche Antriebsanordnungen weisen eine Antriebseinrichtung und eine Abtriebseinheit auf. Die Antriebseinrichtung wird zur Übertragung eines Drehmoments auf die Abtriebseinheit mit der Abtriebseinheit in Eingriff gebracht. Derartige Antriebsanordnungen werden häufig als Malteserkreuzgetriebe oder "Geneva Drive" bezeichnet.

Das Dokument SU1305481 A1 offenbart eine Antriebsanordnung mit den Merkmalen des Oberbegriffs des Anspruchs 1.

Es ist eine Aufgabe der vorliegenden Erfindung, eine verbesserte Antriebsanordnung bereitzustellen, mit der die Funktion der Antriebsanordnung langfristig, beispielsweise bei verminderter Präzision der Anordnung oder auch bei erhöhtem Schmutzaufkommen, sichergestellt werden kann.

Diese Aufgabe wird mit einer Antriebsanordnung mit den Merkmalen des Patentanspruchs 1 gelöst.

Weitere Ausführungsformen sind in den abhängigen Ansprüchen angegeben.

Die erfindungsgemäße Antriebsanordnung zum Antreiben wenigstens einer um eine Achse verlagerbaren Abtriebseinheit umfasst wenigstens eine um eine Drehachse drehbare Antriebseinrichtung, die wenigstens ein Antriebselement und wenigstens ein Halteelement aufweist. Das wenigstens eine Antriebselement ist in radialer Richtung versetzt zu dem wenigstens einen Halteelement angeordnet. Die Antriebsanordnung umfasst ferner wenigstens eine Abtriebseinheit, wobei die Abtriebseinheit wenigstens eine Antriebsausnehmung und wenigstens eine Halteausnehmung aufweist. Das wenigstens eine Antriebselement ist der wenigstens einen Antriebsausnehmung zugeordnet und greift zum Antreiben der Abtriebseinheit in die wenigstens eine Antriebsausnehmung ein. Das wenigstens eine Halteelement ist der wenigstens einen Halteausnehmung zugeordnet und greift zum Halten der Abtriebseinheit in einer eingestellten Position in die wenigstens eine Halteausnehmung ein. Das wenigstens eine Antriebselement weist einen von einem Kreisquerschnitt abweichenden und zumindest abschnittsweise gekrümmten Querschnitt auf und/oder die wenigstens eine Antriebsausnehmung sich in radialer Richtung aufweitet, um eine Eintrittsöffnung für das wenigstens eine Antriebselement festzulegen.

Die Antriebseinrichtung und die Abtriebseinheit sind erfindungsgemäß derart ausgebildet, dass die Funktion der Antriebsanordnung dauerhaft gewährleistet werden kann. Insbesondere kann der drehmomentübertragende Eingriff zwischen der wenigstens einen Antriebsausnehmung und dem wenigstens Antriebselement selbst dann sichergestellt werden, wenn es aufgrund von Fertigungstoleranzen, Montagetoleranzen und/oder elastischen Deformationen der Antriebseinrichtung und/oder der Abtriebseinheit zu einer Vergrößerung des Abstands zwischen der Antriebseinrichtung und der Abtriebseinheit kommt. Zudem kann die Funktionsfähigkeit der Antriebsanordnung auch beibehalten werden, wenn die Antriebseinrichtung und/oder oder die Antriebseinheit verschmutzt sind. Eine derartige Vergrößerung des Abstands, insbesondere des radialen Abstands zwischen der Antriebseinrichtung und der Abtriebseinheit, kann zu einer tangentialen Verschiebung zwischen der Antriebseinrichtung und der Abtriebseinheit führen, die den Eingriff des wenigstens einen Antriebselements in die wenigstens eine Antriebsausnehmung beeinträchtigen oder sogar verhindern kann. Anders ausgedrückt kann mit der Erfindung das "Einfädeln" bzw. das Eingreifen des wenigstens einen Antriebselements in die wenigstens eine Antriebsausnehmung selbst dann sichergestellt werden, wenn es zur beschriebenen Vergrößerung des radialen Abstands bzw. zu einer tangentialen Verschiebung zwischen Antriebseinrichtung und Abtriebseinheit kommt.

Durch das Eingreifen des wenigstens einen Antriebselements in die wenigstens eine Antriebsausnehmung werden die Antriebseinrichtung und die Abtriebseinheit derart drehmomentübertragend gekoppelt, dass es bei einer Ausführung einer Drehbewegung der Antriebseinrichtung zu einer schrittweisen Dreh- oder Verstellbewegung der Abtriebseinheit um deren Dreh- oder Schwenkachse kommen kann. Eine kontinuierliche Drehbewegung der Antriebseinrichtung um die Drehachse kann dementsprechend zu einer schrittweisen Dreh- oder Verstellbewegung der Abtriebseinheit führen. Die Dreh- oder Verstellbewegung der Abtriebseinheit wird immer dann ausgeführt, wenn sich das wenigstens eine Antriebselement mit der wenigstens einen Antriebsausnehmung in Eingriff befindet. Bei einer Drehbewegung der Antriebseinrichtung kann das wenigstens eine Antriebselement in die zugeordnete Antriebsausnehmung der Abtriebseinheit eingreifen, die Abtriebseinheit mitnehmen und anschließend die Antriebsausnehmung wieder verlassen. Zwischen dem Eingreifen des Antriebselements in die Antriebsausnehmung und dem Verlassen der Antriebsausnehmung drückt das wenigstens eine Antriebselement gegen eine Wandung der Antriebsausnehmung, wodurch ein Drehmoment auf die Abtriebseinheit ausgeübt wird, das zu einer Dreh- oder Verstellbewegung der Abtriebseinheit führt.

Das wenigstens eine Halteelement greift immer dann in die wenigstens eine Halteausnehmung der Abtriebseinheit ein, wenn das wenigstens eine Antriebselement nicht in Eingriff mit der wenigstens einen Antriebsausnehmung der Abtriebseinheit steht. Das wenigstens eine Halteelement kann formschlüssig in die wenigstens eine Halteausnehmung eingreifen. In diesem Zustand kann die Abtriebseinheit in ihrer eingestellten Position gehalten werden. Die Antriebsanordnung befindet sich somit in einer Sperrstellung. In der Sperrstellung wird ein Verdrehen der Abtriebseinheit um deren Dreh- oder Schwenkachse verhindert. Aufgrund der Drehbewegung der Antriebseinrichtung mit dem wenigstens einen Halteelement greift das wenigstens eine Halteelement zunächst mit einem Abschnitt in die wenigstens eine zugeordnete Halteausnehmung der Abtriebseinheit ein, wobei sich dieser Abschnitt aufgrund der Drehbewegung der Antriebseinrichtung kontinuierlich vergrößert. Nach Ausführung eines vorbestimmten Drehwinkels kann das Halteelement die wenigstens eine Halteausnehmung wieder verlassen. Sobald das wenigstens eine Halteelement auch nur teilweise in die Halteausnehmung eingreift, kann ein Verdrehen der Abtriebseinheit um deren Dreh- bzw. Schwenkachse verhindert werden.

Wird die Antriebseinrichtung weiter angetrieben, drehen sich das Halteelement und das Antriebselement weiter, damit das Antriebselement mit der nächsten Antriebsausnehmung in Eingriff gebracht werden kann. Beispielsweise kann das Antriebselement um 90° bis 270° nach dem Austritt aus einer Antriebsausnehmung um die Drehachse der Antriebsanordnung rotiert werden, um mit der nächsten Antriebsausnehmung in Eingriff zu gelangen. Gleichzeitig dreht sich das wenigstens eine Halteelement in der Halteausnehmung weiter und verlässt die Halteausnehmung, wenn oder kurz nachdem das Antriebselement in die nächste Antriebsausnehmung eingreift. Das wenigstens eine Halteelement gibt somit die Abtriebseinheit für den nächsten Verstellschritt frei.

Das wenigstens eine Antriebselement weist einen Querschnitt mit wenigstens einem gekrümmten Abschnitt auf, der zum Antreiben der wenigstens einen Abtriebseinheit eine Wandung der wenigstens einen Antriebsausnehmung kontaktiert. Das wenigstens eine Antriebselement weist bezogen auf die Drehachse der Antriebseinrichtung einen in radialer Richtung reduzierten Querschnitt auf.

Der Querschnitt des wenigstens einen Antriebselements kann wenigstens einen ersten Scheitelpunkt und wenigstens einen zweiten Scheitelpunkt aufweisen. Der Abstand zwischen dem ersten Scheitelpunkt und dem zweiten Scheitelpunkt legt die größte Erstreckung des Antriebselements fest. Der Querschnitt des wenigstens einen Antriebselements kann seine größte Erstreckung in einer Richtung quer zur radialen Richtung der Antriebseinrichtung aufweisen. Alternativ kann der Querschnitt des wenigstens einen Antriebselements wenigstens eine erste Kante und wenigsten eine zweite Kante aufweisen, deren Abstand zueinander die größte Erstreckung des Antriebselements festlegt. Sind zwei Kanten an dem Querschnitt des Antriebselements vorgesehen, weist der Querschnitt des Antriebselements zwei gekrümmte Abschnitte auf, die sich zwischen den beiden Kanten erstrecken.

Weist der Querschnitt des Antriebselements zwei Scheitelpunkte auf, ist der Querschnitt auch im Bereich der Scheitelpunkte gekrümmt. Der Querschnitt des Antriebselements kann somit mehrere Krümmungsradien aufweisen. Der Krümmungsradius im Bereich der Scheitelpunkte kann sich von dem Krümmungsradius des Abschnitts zwischen den beiden Scheitelpunkten unterscheiden.

Der Querschnitt des wenigstens einen Antriebselements weist wenigstens einen dritten Scheitelpunkt und wenigstens einen vierten Scheitelpunkt auf. Der Abstand zwischen dem dritten Scheitelpunkt und dem vierten Scheitelpunkt ist kleiner als der Abstand zwischen dem ersten Scheitelpunkt oder der ersten Kante und dem zweiten Scheitelpunkt oder der zweiten Kante. Der dritte Scheitelpunkt und der vierte Scheitelpunkt können in radialer Richtung der Antriebseinrichtung in einer Flucht liegen. Der Abstand zwischen dem ersten Scheitelpunkt und dem zweiten Scheitelpunkt kann auf die Größe der Antriebsausnehmung abgestimmt sein, um eine geführte Bewegung des wenigstens einen Antriebselements in der Antriebsausnehmung bei der Verlagerung der Abtriebseinheit um deren Dreh- oder Schwenkachse zu erreichen.

Durch den Abstand zwischen dem dritten Scheitelpunkt und dem vierten Scheitelpunkt, der kleiner als der Abstand zwischen dem ersten Scheitelpunkt und dem zweiten Scheitelpunkt ist, kann erreicht werden, dass tangentiale Verschiebungen zwischen der Antriebseinrichtung und der Abtriebseinheit, welche aufgrund von Toleranzen entstehen können, kompensiert werden können, sodass das Eingreifen des wenigstens einen Antriebselements in die zugeordnete Antriebsausnehmung sichergestellt werden kann. Unter anderem über den Abstand zwischen dem dritten oder dem vierten Scheitelpunkt, d.h. über den in radialer Richtung reduzierten Querschnitt des Antriebselements kann die Größe eines radialen Freiraums zwischen dem wenigstens einen Halteelement und dem wenigstens einen Antriebselement festgelegt werden, der für das wechselweise Eingreifen des Antriebselements und des Halteelements in die zugeordneten Antriebsausnehmungen und Halteausnehmungen unterstützen kann.

Die wenigstens eine Antriebsausnehmung kann sich in radialer Richtung nach außen hin aufweiten, um eine Eintrittsöffnung für das wenigstens eine Antriebselement festzulegen. Durch die Aufweitung der Antriebsausnehmung in radialer Richtung nach außen kann die Eintrittsöffnung der Antriebsausnehmung für das Eindringen bzw. Eingreifen des Antriebselements vergrößert werden. Der Abstand zwischen zwei gegenüberliegenden Flanken der wenigstens einen Antriebsausnehmung kann sich in radialer Richtung nach außen vergrößern. Sollte die wenigstens eine Antriebsausnehmung nach radial innen gerichtet sein, kann sich die wenigstens eine Antriebsausnehmung in radialer Richtung nach innen aufweiten. Dies gilt insbesondere dann, wenn die Antriebseinrichtung radial innerhalb der Abtriebseinheit angeordnet ist.

Die Drehachse der Antriebseinrichtung kann durch oder entlang des wenigstens einen Halteelements verlaufen. Das wenigstens eine Halteelement weist eine gekrümmte Außenfläche auf. Die Krümmung der Außenfläche des Halteelements ist auf die Krümmung der wenigstens einen Halteausnehmung abgestimmt, sodass das wenigstens eine Halteelement in die wenigstens eine Halteausnehmung eindringen und in der Halteausnehmung rotieren kann. Sobald das wenigstens eine Halteelement in die wenigstens eine Halteausnehmung eindringt, kann ein Verdrehen der Abtriebseinheit um deren Dreh- oder Schwenkachse verhindert werden. Das wenigstens eine Halteelement kann zumindest in einem Abschnitt eine Krümmung aufweisen, die auf die Krümmung der wenigstens einen Halteausnehmung abgestimmt ist. Der Krümmungsradius des gekrümmten Abschnitts des Halteelements kann auf den Krümmungsradius der Wandung der wenigstens einen Halteausnehmung abgestimmt sein.

Das wenigstens eine Antriebselement und das wenigstens eine Halteelement können über wenigstens ein Verbindungselement miteinander verbunden sein. Das Verbindungselement kann sich in radialer Richtung erstrecken. Das Verbindungselement kann beispielsweise scheiben- oder nockenförmig ausgebildet sein. Das wenigstens eine Verbindungselement kann ferner mit wenigstens einem Kopplungsabschnitt verbunden sein, über den das wenigstens eine Verbindungselement mit einem Antrieb koppelbar ist. Die Kopplung mit dem Antrieb kann unmittelbar oder mittelbar über weitere Komponenten erfolgen.

Das wenigstens eine Antriebselement und das wenigstens eine Halteelement können sich parallel zu der Drehachse der Antriebseinrichtung erstrecken. Die Antriebsausnehmungen und die Halteausnehmungen können korrespondierend zu der Form oder dem Querschnitt des Antriebselements und des Halteelements ausgebildet sein. Das wenigstens eine Antriebselement kann einen ovalen oder ellipsenförmigen oder linsenförmigen Querschnitt aufweisen.

Im Folgenden werden beispielhafte Ausführungsformen der vorliegenden Erfindung mit Bezug auf die beigefügten Figuren beschrieben. Es stellen dar:
- Figuren 1 und 2: perspektivische Ansichten eines Nachführsystems für Solarmodule gemäß einer Ausführungsform;
- Figuren 3 bis 7: verschiedene Ansichten einer Schwenkeinheit gemäß einer ersten Ausführungsform;
- Figur 8: eine Explosionsdarstellung der in den Figuren 3 bis 7 gezeigten Schwenkeinheit;
- Figur 9: eine vergrößerte Ansicht des in Figur 8 mit IX gekennzeichneten Ausschnitts;
- Figur 10: eine weitere Explosionsdarstellung der in den Figuren 3 bis 9 gezeigten Schwenkeinheit;
- Figur 11: eine vergrößerte Ansicht des in Figur 10 mit XI gekennzeichneten Ausschnitts;
- Figuren 12 bis 14: verschiedene Ansichten eines Antriebsbogens der in den Figuren 3 bis 11 gezeigten Schwenkeinheit;
- Figuren 15 bis 17: verschiedene Ansichten einer Antriebseinrichtung der in den Figuren 3 bis 11 gezeigten Schwenkeinheit;
- Figuren 18 bis 22: verschiedene Anschichten einer Schwenkeinheit gemäß einer zweiten Ausführungsform der Erfindung;
- Figur 23: eine Explosionsdarstellung der in den Figuren 18 bis 22 gezeigten Schwenkeinheit;
- Figur 24: eine vergrößerte Ansicht des in Figur 23 mit XXIV gekennzeichnetenAusschnitts;
- Figur 25: eine weitere Explosionsdarstellung der in den Figuren 18 bis 23 gezeigten Schwenkeinheit;
- Figur 26: eine vergrößerte Ansicht des in Figur 25 mit XXVI gekennzeichneten Ausschnitts;
- Figuren 27 bis 33: verschiedene Ansichten einer Antriebseinrichtung der in den Figuren 18 bis 26 gezeigten Schwenkeinheit;
- Figuren 34 bis 37: perspektivische Ansichten einer Schwenkeinheit gemäß einer dritten Ausführungsform der Erfindung im an einem Pfosten angebrachten Zustand;
- Figuren 38 bis 41: verschiedene Seitenansichten der Schwenkeinheit gemäß der dritten Ausführungsform der Erfindung im an einem Pfosten angebrachten Zustand; und
- Figur 42: eine perspektivische Ansicht der Antriebseinrichtung gemäß der dritten Ausführungsform der Erfindung.

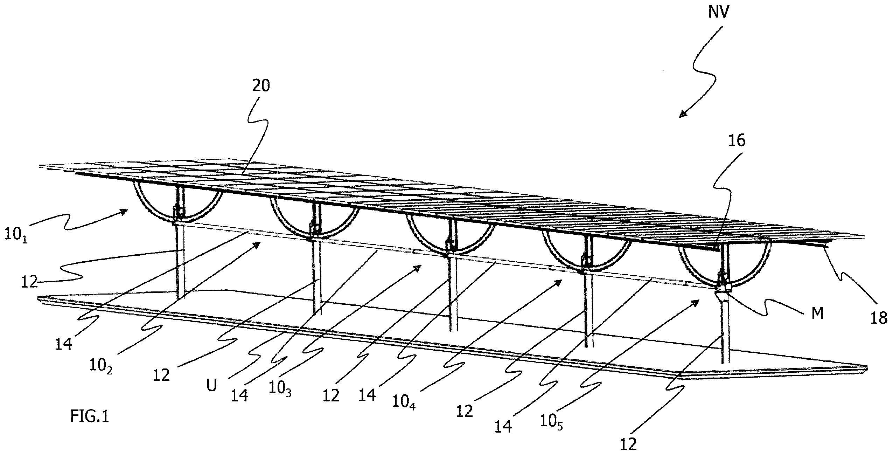

Figur 1 zeigt eine perspektivische Ansicht einer Nachführvorrichtung für Solarmodule. Die Nachführvorrichtung ist allgemein mit NV bezeichnet. Die Nachführvorrichtung NV weist mehrere Schwenkeinheiten 10₁ bis 10₅ auf. Jede der Schwenkeinheiten 10₁ bis 10₅ ist mit einem im Untergrund U verankerten Pfosten 12 verbunden. Die Schwenkeinheiten 10₁ bis 10₅ sind untereinander über die Antriebswellen 14 miteinander verbunden. Die Antriebswellen 14 werden von einem Motor M angetrieben, der in Figur 1 an der Schwenkeinheit 10₅ angeordnet ist. Auf diese Weise können mehrere Schwenkeinheiten 10₁ bis 10₅ mit einem einzigen Antrieb angetrieben werden. Die Schwenkeinheiten 10₁ bis 10₅ sind ferner untereinander über Tragschienen 16 und 18 verbunden, an denen Solarmodule 20 mit Hilfe von Befestigungselementen angebracht werden können. Zum Ausrichten der Solarmodule 20 nach der Sonne werden die Schwenkeinheiten 10₁ bis 10₅ über die Antriebswellen 14 angetrieben, wodurch die Schwenkeinheiten 10₁ bis 10₅ die daran angebrachten Solarmodule 20 verschwenken können.

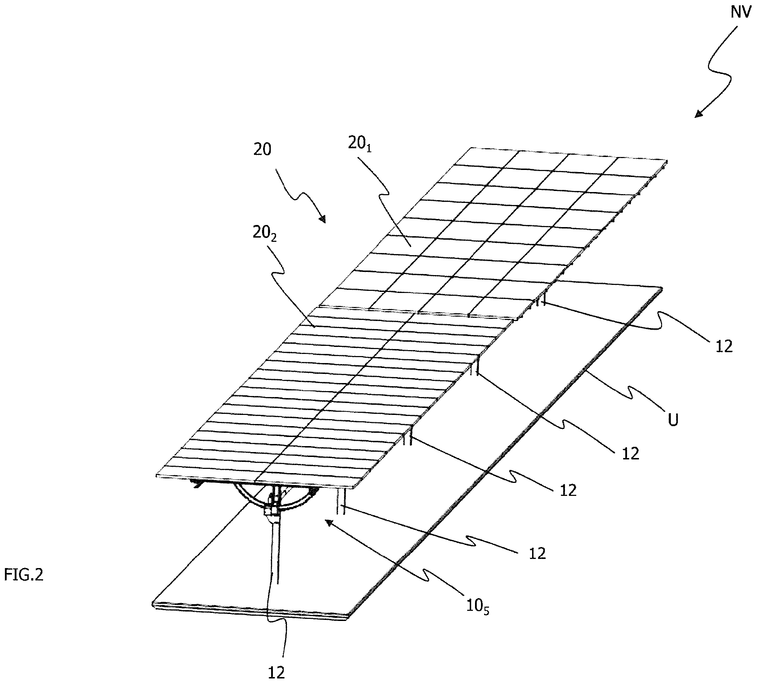

Figur 2 zeigt eine weitere perspektivische Ansicht der Nachführvorrichtung NV, in der die Solarmodule 20 und die an einem Pfosten 12 angeordnete Schwenkeinheit 10₅ sowie die Pfosten 12 der weiteren Schwenkeinheiten 10₁ bis 10₄ gezeigt sind. An der Nachführvorrichtung NV können Solarmodule 20 mit unterschiedlichen Formen, Größen, Ausrichtungen und auch Solarmodule 20 verschiedener Konstruktionsarten angebracht werden, wie in Figur 2 durch die unterschiedlich dargestellten Solarmodule 20₁ und 20₂ veranschaulicht wird.

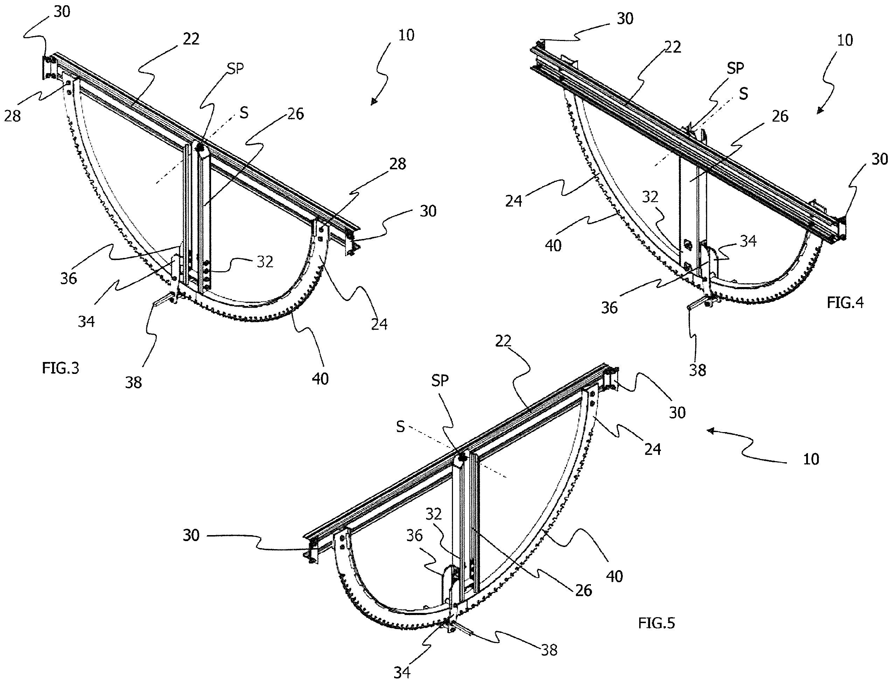

Die Figuren 3 bis 5 zeigen verschiedene perspektivische Ansichten einer Schwenkeinheit 10 gemäß einer ersten Ausführungsform. Die Schwenkeinheit 10 weist einen Querträger 22, einen an dem Querträger 22 angebrachten Antriebsbogen 24 und ein Trägerelement 26 auf.

Der Querträger 22 und das Trägerelement 26 sind verschwenkbar miteinander verbunden. Durch den Querträger 22 und das Trägerelement 26 erstreckt sich eine Schwenkachse S. Die Schwenkachse S erstreckt sich durch den an der Verbindungsstelle zwischen dem Querträger 22 und dem Trägerelement 26 gebildeten Schwenkpunkt SP.

Der Antriebsbogen 24 ist über Befestigungsmittel 28 wie zum Beispiel Schrauben oder Bolzen mit dem Querträger 22 verbunden. An den Enden des Querträgers 22 sind Verbindungselemente 30 erkennbar. Über die Verbindungselemente 30 kann der Querträger 22 mit den in Figur 1 gezeigten Tragschienen 16 und 18 verbunden werden.

Das Trägerelement 26 kann mit seinem der Schwenkachse S entgegengesetzten Ende 32 mit einem im oder am Untergrund verankerbaren Pfosten 12 (siehe Figur 1) verbunden werden. An dem Ende 32 des Trägerelements 26 sind ferner Befestigungselemente 34 und 36 angebracht. Über die Befestigungselemente 34 und 36 ist eine Antriebseinrichtung 38 mit dem Trägerelement 26 verbunden. Die Antriebseinrichtung 38 dient zum Verschwenken in eine neue Schwenkstellung und Halten des Antriebsbogens 24 in einer eingestellten Position. Das Verschwenken des Antriebsbogens kann schrittweise erfolgen. Dazu steht die Antriebseinrichtung 38 mit einer Antriebskontur 40 an dem Antriebsbogen 24 in Eingriff. Die Antriebskontur 40 ist in radialer Richtung außen an dem Antriebsbogen 24 ausgebildet. Die Antriebseinrichtung 38 und der Antriebsbogen 24 bilden eine Antriebsanordnung.

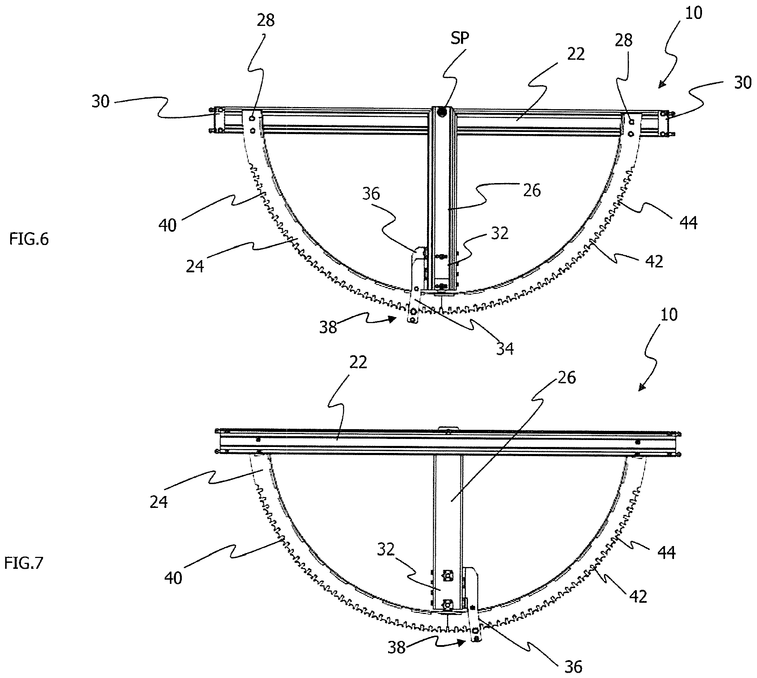

Die Figuren 6 und 7 zeigen zwei Ansichten der Schwenkeinheit 10 aus entgegengesetzten Blickrichtungen. In den Figuren 6 und 7 sind der Querträger 22, der Antriebsbogen 24 und das Trägerelement 26 gezeigt. In der Ausgangstellung bzw. der Montagestellung der Schwenkeinheit 10, d.h. der Querträger 22 wurde nicht relativ zu dem Trägerelement 26 um den Schwenkpunkt SP verschwenkt, erstreckt sich das Trägerelement 26 senkrecht zu dem Querträger 22. Der Schwenkpunkt SP ist in der Mitte des Querträgers 22 ausgebildet. An den Enden des Querträgers 22 sind die Verbindungselemente 30 gezeigt, die zum Verbinden des Querträgers 22 mit den Tragschienen 16 und 18 (siehe Figur 1) dienen.

An dem Ende 32 des Trägerelements 26, das dem Schwenkpunkt SP entgegengesetzt ist, sind die Befestigungselemente 34 und 36 mit dem Trägerelement 26 verbunden. Die Antriebseinrichtung 38 ist an den Befestigungselementen 34 und 36 drehbar gelagert. Die Befestigungselemente 34 und 36 halten die Antriebseinrichtung 38 an dem Trägerelement 26. Die Antriebseinrichtung 38 steht in Eingriff mit der Antriebskontur 40 an dem Antriebsbogen 24. Die Antriebskontur 40 weist zwei verschiedene Arten von Ausnehmungen auf. Die Antriebskontur 40 weist Antriebsausnehmungen 42 und Halteausnehmungen 44 auf, die in Richtung des Umfangs des Antriebsbogens 24 wechselweise angeordnet sind. Wenn die Antriebseinrichtung 38 in die Antriebsausnehmungen 42 eingreift, wird der Antriebsbogen 24 und der damit verbundene Querträger 22 bewegt. Greift die Antriebseinrichtung 38 in die Halteausnehmungen 44 ein, kann der Antriebsbogen 24 und der damit verbundene Querträger 22 in seiner eingestellten Stellung gehalten werden. Die Antriebseinrichtung 38 kann im Eingriff mit einer der Halteausnehmungen 44 auch ihre Stellung ändern, um in die nächste Antriebsausnehmung 42 eingreifen zu können. Dabei wird keine Torsionslast auf die Antriebswelle 14 übertragen. Auf die Antriebskontur 40 und die Antriebseinrichtung 38 wird im weiteren Verlauf dieser Beschreibung noch näher eingegangen.

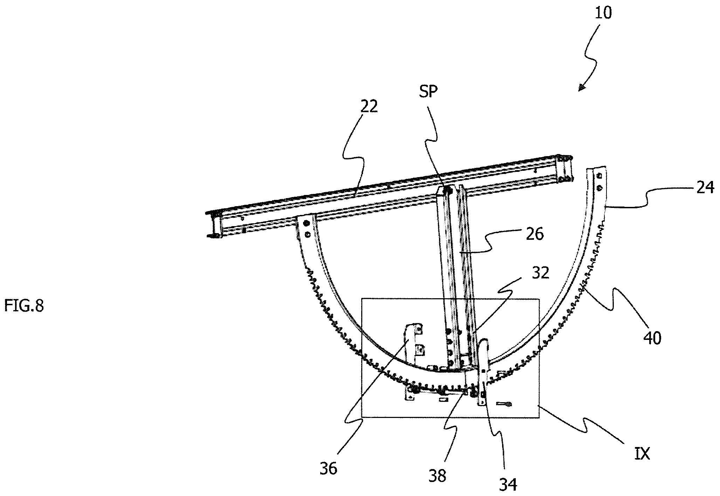

Figur 8 zeigt eine perspektivische Explosionsdarstellung der Schwenkeinheit 10. In Figur 8 sind der Querträger 22, der Antriebsbogen 24, das Trägerelement 26, die Antriebseinrichtung 38 und die beiden Befestigungselemente 34 und 36 gezeigt.

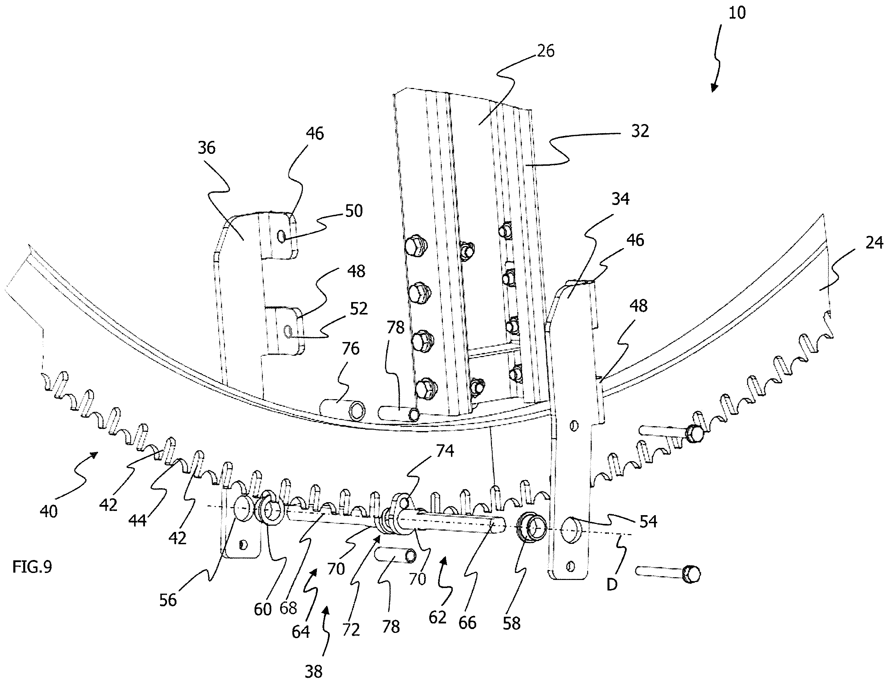

Figur 9 zeigt eine vergrößerte Ansicht des in Figur 8 mit IX gekennzeichneten Ausschnitts. In Figur 9 sind das Ende 32 des Trägerelements 26, die beiden Befestigungselemente 34 und 36 und ein Abschnitt des Antriebsbogens 24 gezeigt.

Die Befestigungselemente 34 und 36 weisen jeweils zwei Befestigungsabschnitte 46 und 48 auf. Die Befestigungsabschnitte 46 und 48 verlaufen abgewinkelt zum Hauptkörper der Befestigungselemente 34 und 36. Jeder Befestigungsabschnitt 46 und 48 hat eine Öffnung 50, 52. Die Öffnungen 50, 52 sind in Figur 9 nur an dem Befestigungselement 36 erkennbar. Mit diesen Befestigungsabschnitten 46 und 48 werden die Befestigungselemente 34 und 36 mit dem Trägerelement 26 verbunden.

Die Befestigungselemente 34 und 36 weisen jeweils eine Lageröffnung 54 und 56 auf, in der die Antriebseinrichtung 38 gelagert werden kann. Zur Lagerung der Antriebseinrichtung 38 in den Öffnungen 54 und 56 sind Lagerbuchsen 58 und 60 vorgesehen, die in den Öffnungen 54 und 56 aufgenommen werden. Die Antriebseinrichtung 38 weist zwei Kopplungselemente 62 und 64 auf. Die Kopplungselemente 62 und 64 sind stabförmig ausgebildet. Die Kopplungselemente 62 und 64 können abschnittsweise in den Öffnungen 54, 56 bzw. in den in den Öffnungen 54, 56 angeordneten Lagerbuchsen 58, 60 aufgenommen werden. Die Kopplungselemente 62 und 64 weisen jeweils einen Kopplungsabschnitt 66, 68 und einen Lagerabschnitt 70 auf. Die Kopplungsabschnitte 66 und 68 sind mit einem Querschnitt versehen, der zur Kopplung mit einer Antriebswelle 14 (siehe Figur 1) geeignet ist. Zwischen den Kopplungselementen 62 und 64 ist der Antriebsabschnitt 72 der Antriebseinrichtung 38 ausgebildet, in dem das Antriebselement 74 vorgesehen ist. Das Antriebselement 74 greift in die Antriebskontur 40 des Antriebsbogens 24 ein. Im Antriebsabschnitt 72 ist ein Halteelement vorgesehen, das in Figur 9 nicht gezeigt ist. Auf das Halteelement wird im weiteren Verlauf dieser Beschreibung im Detail eingegangen.

Die Schwenkeinheit 10 weist eine Führungselement 76 auf, welches eine Führungseinrichtung zur radialen Führung des Antriebsbogens 24 bildet. An dem Führungselement 76 kann sich der Antriebsbogen 24 in radialer Richtung abstützen. Das Führungselement 76 verhindert somit, dass sich der Antriebsbogen 24 in radialer Richtung aus dem Eingriff mit der Antriebseinrichtung 38 lösen kann. Das Führungselement 76 ist an einem Distanzstück bzw. Lagerelement 78 gelagert. Das Lagerelement 78 ist an einer Schraube angeordnet, die sich zwischen den Befestigungselementen 34 und 36 erstreckt. Der Antriebsbogen 24 verläuft zwischen den beiden Befestigungselementen 34 und 36. Die Befestigungselemente 34 und 36 werden über Schrauben miteinander verbunden. Um einen vorbestimmten Abstand zwischen den beiden Befestigungselementen 34 und 36 festzulegen und einzuhalten, sind die Distanzstücke 78 vorgesehen, durch die sich die Schrauben erstrecken.

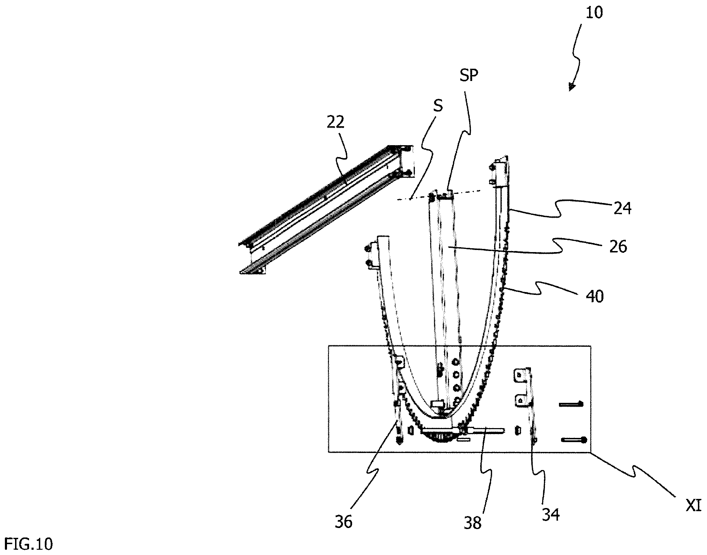

Figur 10 zeigt eine perspektivische Explosionsdarstellung der Schwenkeinheit 10. In Figur 10 sind der Querträger 22, der Antriebsbogen 24, das Trägerelement 26, die Antriebseinrichtung 38 und die beiden Befestigungselemente 34 und 36 gezeigt.

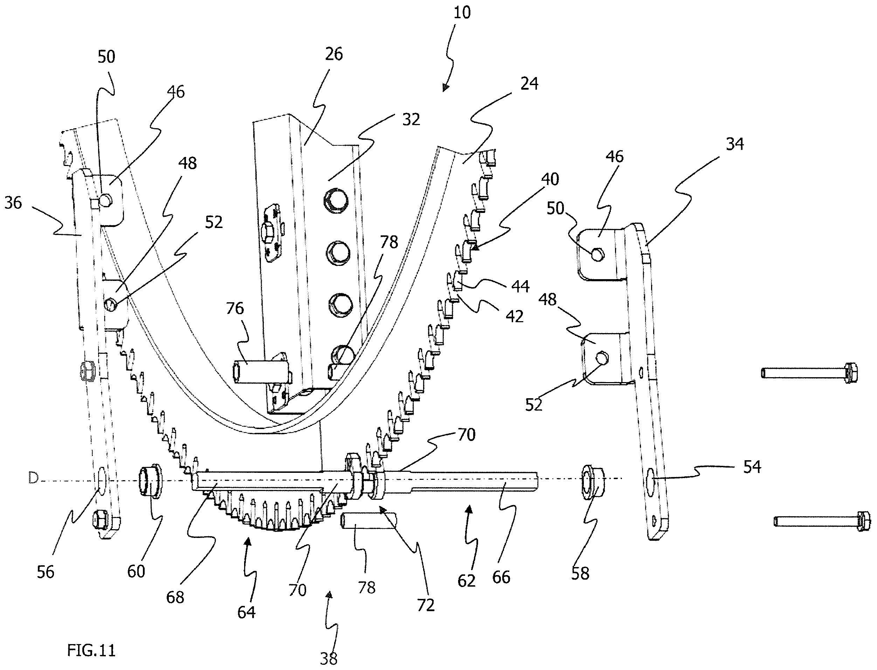

Figur 11 zeigt eine vergrößerte Ansicht des in Figur 10 mit XI gekennzeichneten Ausschnitts. In Figur 11 sind die Antriebseinrichtung 38, die mit der Antriebskontur 40 des Antriebsbogens 24 in Eingriff steht, die Befestigungselemente 34 und 36 sowie das Ende 32 des Trägerelements 26 gezeigt.

Die Antriebseinrichtung 38 weist zwei Kopplungselemente 62 und 64 auf, die sich ausgehend von dem Antriebsabschnitt 72 in entgegengesetzter Richtung erstrecken. An den Antriebsabschnitt 72 schließen sich in Richtung der Drehachse D die Lagerabschnitte 70 der Kopplungselemente 62 und 64 an. Auf die Lagerabschnitte 70 folgen in Richtung der Drehachse D die Kopplungsabschnitte 66 und 68 mit ihrem zur Kopplung mit einer Antriebswelle 14 ausgebildeten Querschnitt. Im montierten Zustand der Schwenkeinheit 10 erstrecken sich die Kopplungselemente 62 und 64 durch die Öffnungen 54 und 56 und durch die in den Öffnungen 54 und 56 angeordneten Lagerbuchsen 58 und 60.

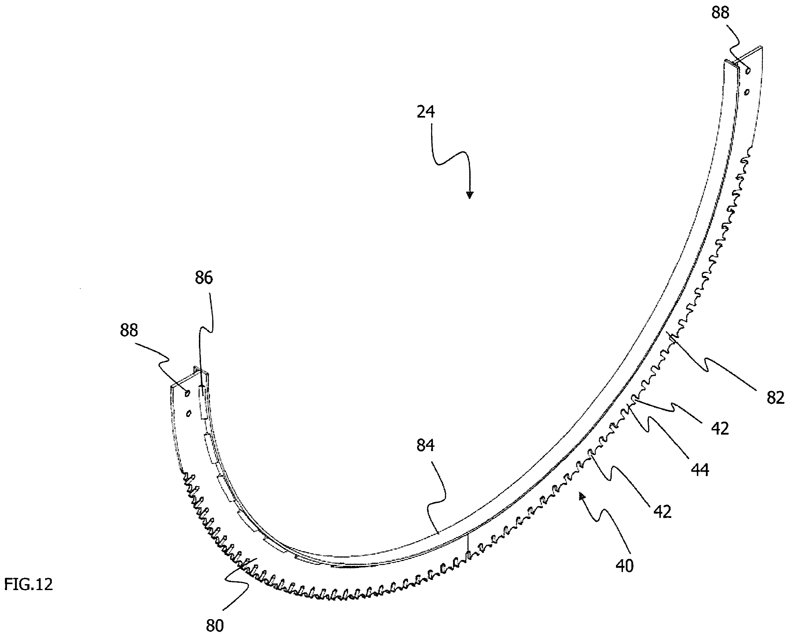

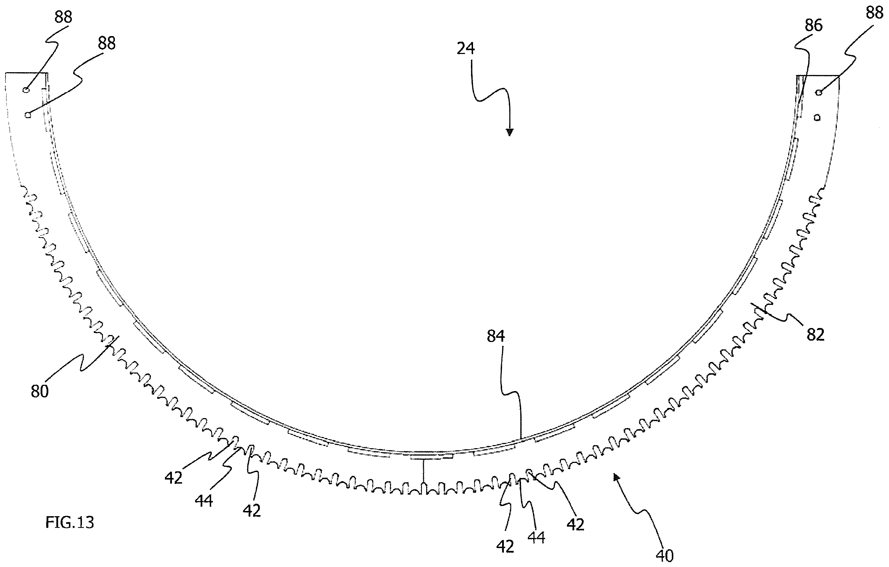

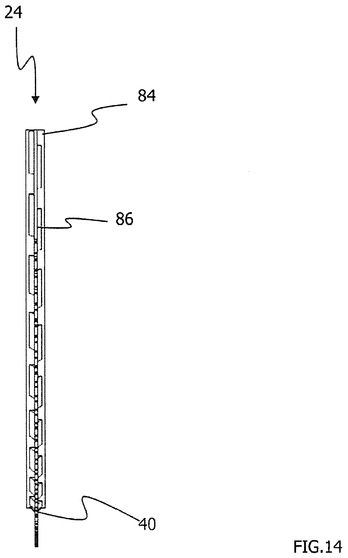

Die Figuren 12 bis 14 zeigen verschiedene Ansichten des Antriebsbogens 24. Der Antriebsbogen 24 setzt sich aus zwei Teilbögen 80 und 82 zusammen, die mit einem bogenförmigen Basiselement 84 verbunden sind. Die Teilbögen 80 und 82 können mit dem Basiselement 84 verschweißt sein, wie durch die dargestellten Schweißnähte 86 ersichtlich wird. Im Querschnitt betrachtet weist der Antriebsbogen 24 durch das Basiselement 84 einen im Wesentlichen T-förmigen Querschnitt auf. Ausgehend von diesem Basiselement 84 erstrecken sich die Teilbögen 80, 82 in radialer Richtung. Die Teilbögen 80, 82 weisen jeweils zwei Öffnungen 88 auf, über die der Antriebsbogen 24 mit dem Querträger 22 verbunden werden kann.

Die Antriebskontur 40 weist Antriebsausnehmungen 42 und Halteausnehmungen 44 auf. Die Antriebsausnehmungen 42 und die Halteausnehmungen 44 sind in Umfangsrichtung des Antriebsbogens 24 wechselweise angeordnet. Die Antriebsausnehmungen 42 sind radiale Einschnitte in dem Antriebsbogen 24. Die Antriebsausnehmungen 42 können auch als schlitzförmig bezeichnet werden. Die zwischen den Antriebsausnehmungen 42 bzw. den Einschnitten gebildeten Abschnitte des Antriebsbogens 24 sind mit Halteausnehmungen 44 versehen. Die Halteausnehmungen 44 sind gewölbt bzw. gekrümmt ausgebildet. Die Halteausnehmungen 44 sind im Wesentlichen halbkreisförmig. Die Antriebsausnehmungen 42 erstrecken sich in radialer Richtung weiter in den Antriebsbogen 24 hinein als die Halteausnehmungen 44.

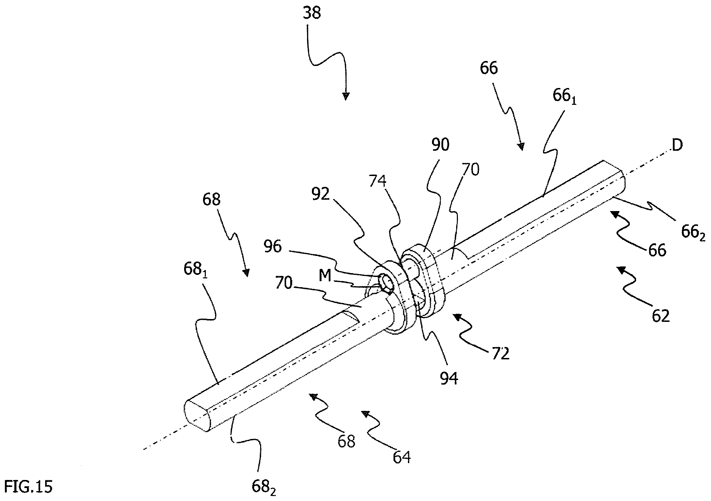

Figur 15 zeigt eine perspektivische Ansicht der Antriebseinrichtung 38. Die Antriebseinrichtung 38 ist um die Drehachse D drehbar, die der Längsachse der Antriebseinrichtung 38 entspricht. Die Antriebseinrichtung 38 weist einen Antriebsabschnitt 72 und zwei Kopplungselemente 62 und 64 auf. Die Kopplungselemente 62 und 64 haben jeweils einen Lagerabschnitt 70 und einen Kopplungsabschnitt 66 und 68. Die Kopplungsabschnitte 66 und 68 haben einen Querschnitt, der zur Kopplung mit einer Antriebswelle 14 (siehe Figur 1) geeignet ist. Dieser Querschnitt wird durch Abflachungen 66₁, 66₂ und 68₁, 68₂ im Bereich der Kopplungsabschnitte 66 und 68 gebildet. Die Kopplungsabschnitte 66 und 68 können beispielsweise in einer Antriebswelle 14 mit einer zu dem Querschnitt der Kopplungsabschnitte 66 und 68 komplementären Ausnehmung aufgenommen werden. Ausgehend von dem Antriebsabschnitt 72 erstrecken sich die Kopplungselemente 62 und 64 in entgegengesetzter Richtung.

Der Antriebsabschnitt 72 weist neben dem Antriebselement 74 zwei Verbindungselemente 90 und 92 auf, die die Kopplungselemente 62 und 64 mit dem Antriebselement 74 verbinden. Die Verbindungselemente 90 und 92 können einstückig mit den Kopplungselementen 62 und 64 ausgebildet sein. Die Verbindungselemente 90 und 92 sind nockenförmig ausgebildet. Ferner weist der Antriebsabschnitt 72 ein Halteelement 94 auf. Das Antriebselement 74 und das Halteelement 94 erstrecken sich zwischen den beiden Verbindungselementen 90 und 92. Das Halteelement 94 ist halbkreissektorförmig ausgebildet und koaxial mit den Kopplungselementen 62 und 64 angeordnet. Das Antriebselement 74 ist exzentrisch angeordnet. Die Längsachse M des Antriebselements 74 erstreckt sich parallel aber in radialer Richtung versetzt zu der Drehachse D der Antriebseinrichtung 38. Das Antriebselement 74 kann stabförmig ausgebildet sein. Das Antriebselement 74 wird in Öffnungen 96 in den Verbindungselementen 90 und 92 aufgenommen.

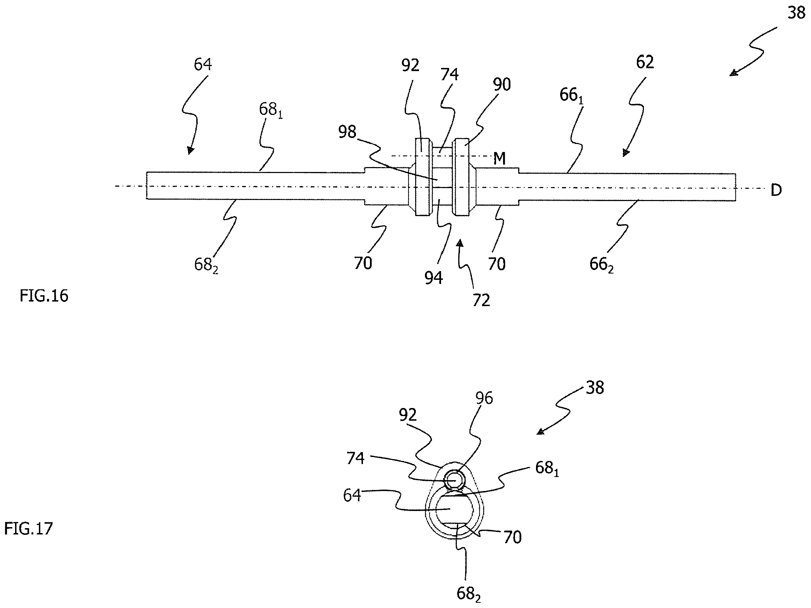

Figur 16 zeigt eine Vorderansicht der Antriebseinrichtung 38. Die Lagerabschnitte 70 der Kopplungselemente 62 und 64 haben einen kreisförmigen Querschnitt. Am Übergang zwischen den Lagerabschnitten 70 und den Kopplungsabschnitten 66 und 68 mit ihren Abflachungen 66₁, 66₂ und 68₁, 68₂ ist eine Stufe erkennbar. Zwischen den beiden Verbindungselementen 90 und 92 erstrecken sich das Antriebselement 74 und das Halteelement 94. Das Antriebselement 74 ist exzentrisch angeordnet. Das Antriebselement 74 erstreckt sich in radialer Richtung versetzt parallel zur Drehachse D. Zwischen dem Antriebselement 74 und dem Halteelement 94 ist ein Freiraum 98 erkennbar. Das Halteelement 94 weist eine halbkreisförmige Außenkontur auf, deren Außenfläche sich bei dieser Ausführungsform auf dem selben Radius wie die Außenumfangsflächen der Lagerabschnitte 70 der Kopplungselemente 62 und 64 um die Drehachse D der Antriebseinrichtung 38 erstreckt.

Figur 17 zeigt eine Seitenansicht der Antriebseinrichtung 38, in der das Kopplungselement 64, das Verbindungselement 92 und das Antriebselement 74 gezeigt sind. Das Verbindungselement 92 ist nockenförmig ausgebildet. In dem Verbindungselement 92 ist eine Öffnung 96 ausgebildet, in der das Antriebselement 74 aufgenommen ist.

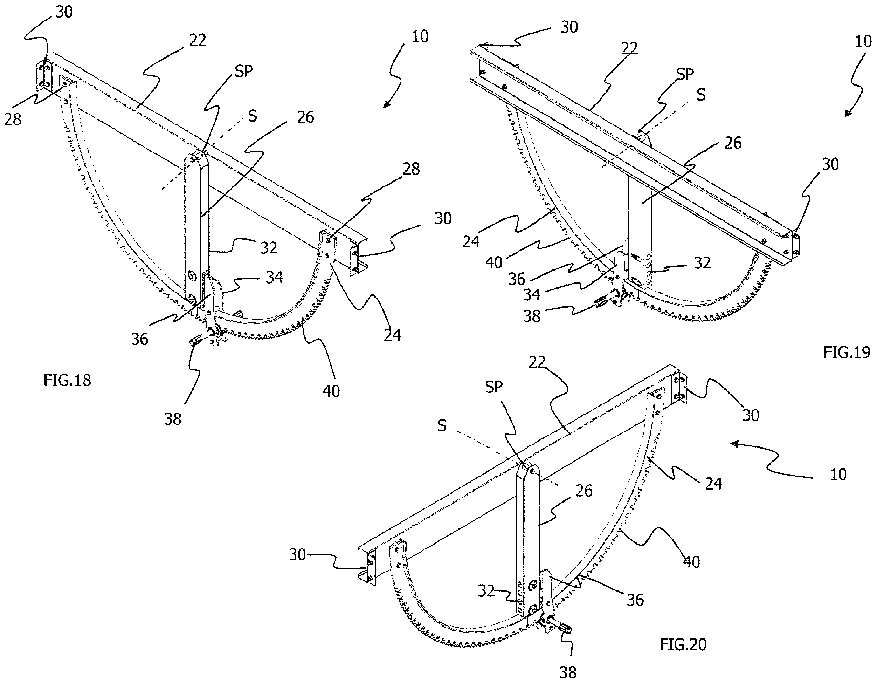

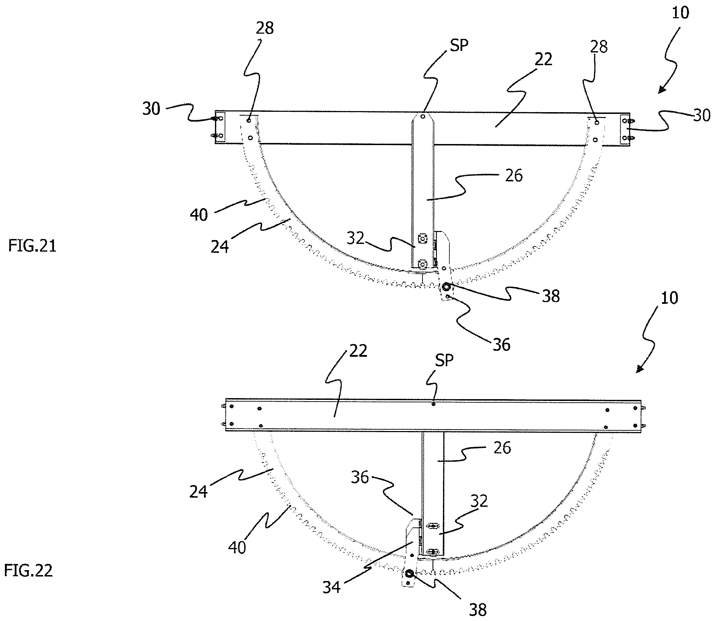

Die im Folgenden beschriebenen Figuren 18 bis 33 zeigen eine Schwenkeinheit 10 gemäß einer zweiten Ausführungsform. Für gleichartige oder gleichwirkende Merkmale oder Komponenten werden die selben Bezugszeichen wie bei der ersten Ausführungsform verwendet. Zur Vermeidung von Wiederholungen werden im Folgenden die Unterschiede zwischen den beiden Ausführungsformen im Detail beschrieben. Komponenten und Merkmale, die bereits bezüglich der ersten Ausführungsform im Detail beschrieben wurden, werden nicht erneut detailliert beschrieben. Die Beschreibung dieser Komponenten und Merkmale gilt analog auch für die zweite Ausführungsform.

Die Figuren 18 bis 22 zeigen verschiedene Ansichten einer Schwenkeinheit 10 gemäß der zweiten Ausführungsform. Die Schwenkeinheit 10 weist einen Querträger 22, einen an dem Querträger 22 angebrachten Antriebsbogen 24 und ein Trägerelement 26 auf. Der Antriebsbogen 24 ist über Befestigungsmittel 28 mit dem Querträger 22 verbunden. An den Enden des Querträgers 22 sind Verbindungselemente 30 angebracht, über die der Querträger 22 mit den Tragschienen 16 und 18 (Figur 1) verbunden werden kann.

Das Trägerelement 26 gemäß der zweiten Ausführungsform weist anders als bei der ersten Ausführungsform keinen C-förmigen Querschnitt auf, sondern ist im Querschnitt rechteckförmig ausgebildet. Eine Schwenkachse S erstreckt sich durch den an der Verbindungsstelle zwischen dem Querträger 22 und dem Trägerelement 26 gebildeten Schwenkpunkt SP.

Ferner ist bereits in den Figuren 18 bis 22 erkennbar, dass sich die Antriebseinrichtung 38 gemäß der zweiten Ausführungsform von der Antriebseinrichtung der ersten Ausführungsform unterscheidet. Auf die Antriebseinrichtung 38 und insbesondere auf die Unterschiede zu der Antriebseinrichtung gemäß der ersten Ausführungsform wird im weiteren Verlauf der Beschreibung im Detail eingegangen.

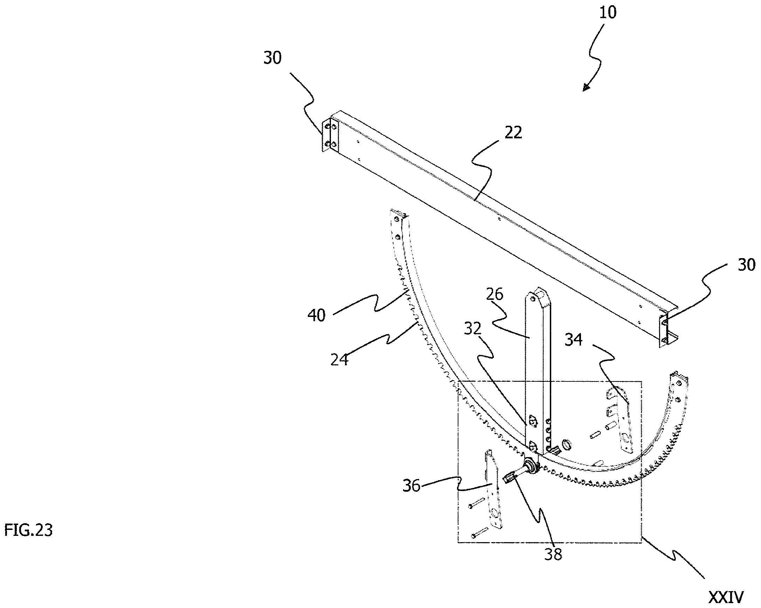

Figur 23 zeigt eine perspektivische Explosionsdarstellung der Schwenkeinheit 10. In Figur 23 sind der Querträger 22, der Antriebsbogen 24, das Trägerelement 26, die Antriebseinrichtung 38 und die beiden Befestigungselemente 34 und 36 gezeigt.

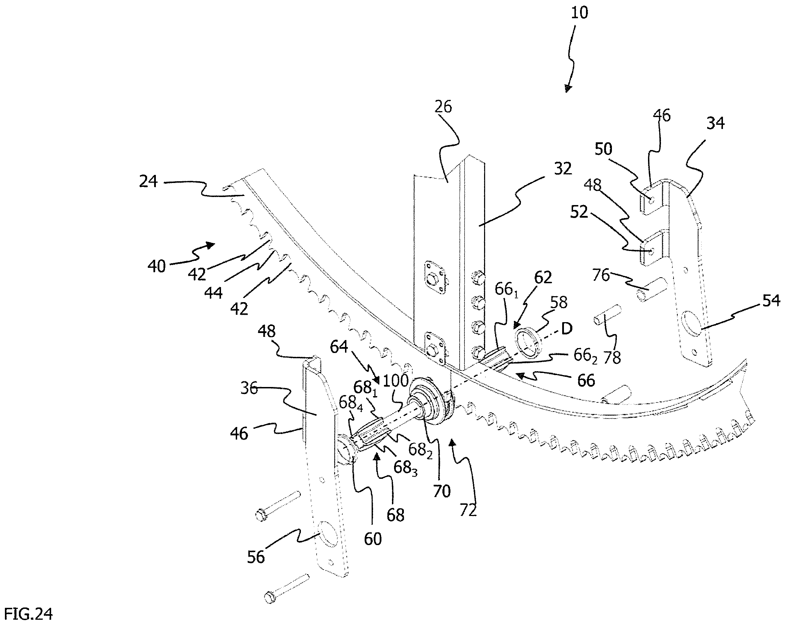

Figur 24 zeigt eine vergrößerte Ansicht des in Figur 23 mit XXIV gekennzeichneten Ausschnitts. In Figur 24 sind das Ende 32 des Trägerelements 26, die beiden Befestigungselemente 34 und 36 und ein Abschnitt des Antriebsbogens 24 gezeigt.

Die Antriebseinrichtung 38 weist zwei Kopplungselemente 62 und 64 auf. Die Kopplungselemente 62 und 64 weisen jeweils einen Kopplungsabschnitt 66, 68 und einen Lagerabschnitt 70 auf, wobei in Figur 24 nur der Lagerabschnitt 70 an dem Kopplungselement 64 erkennbar ist. Die Kopplungsabschnitte 66 und 68 weisen sich in radialer Richtung erstreckende Vorsprünge 66₁, 66₂, 66₃, 66₄ und 68₁, 68₂, 68₃, 68₄ auf, über die die Antriebseinrichtung 38 mit einer entsprechend ausgebildeten Antriebswelle 14 (siehe Figur 1) gekoppelt werden kann, wobei 66₃ und 66₄ in Figur 24 nicht ersichtlich sind. Die Kopplungsabschnitte 66 und 68 sind jeweils über einen stabförmigen Abschnitt 100 mit den Lagerabschnitten 70 verbunden. Zwischen den Kopplungselementen 62 und 64 ist der Antriebsabschnitt 72 der Antriebseinrichtung 38 vorgesehen, in dem das Antriebselement 74 und das Halteelement 94 ausgebildet sind. Das Antriebselement 74 und das Halteelement 94 greifen wechselweise in die Antriebskontur 40 des Antriebsbogens 24 ein.

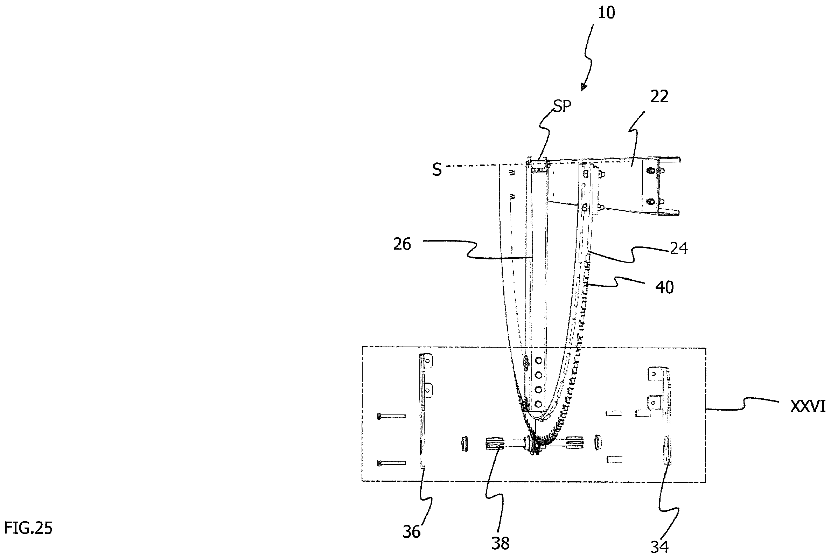

Figur 25 zeigt eine weitere perspektivische Explosionsdarstellung der Schwenkeinheit 10. In Figur 25 sind der Querträger 22, der Antriebsbogen 24, das Trägerelement 26, die Antriebseinrichtung 38 und die beiden Befestigungselemente 34 und 36 gezeigt.

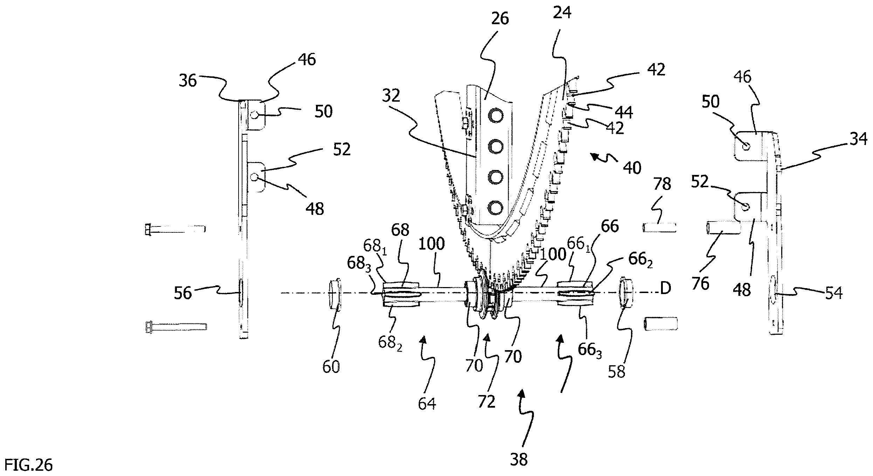

Figur 26 zeigt eine vergrößerte Ansicht des in Figur 25 mit XXVI gekennzeichneten Ausschnitts. In Figur 26 ist die Antriebseinrichtung 38, die mit der Antriebskontur 40 des Antriebsbogens 24 in Eingriff steht, die Befestigungselemente 34 und 36 sowie das Ende 32 des Trägerelements 26 gezeigt.

Die Antriebseinrichtung 38 weist zwei Kopplungselemente 62 und 64 auf, die sich ausgehend von dem Antriebsabschnitt 72 in entgegengesetzter Richtung erstrecken. An dem Antriebsabschnitt 72 schließen sich in Richtung der Drehachse D die Lagerabschnitte 70 der Kopplungselemente 62 und 64 an. Auf die Lagerabschnitte 70 folgen in Richtung der Drehachse D die Verbindungsabschnitte 100, die die Lagerabschnitte 70 mit den Kopplungsabschnitten 66 und 68 verbinden. Die Kopplungsabschnitte 66 und 68 bilden in axialer Richtung den Abschluss der Antriebseinrichtung 38. Im montierten Zustand der Schwenkeinheit 10 erstrecken sich die Kopplungselemente 62 und 64 durch die Öffnungen 54 und 56 und durch die in den Öffnungen 54 und 56 angeordneten Lagerbuchsen 58 und 60.

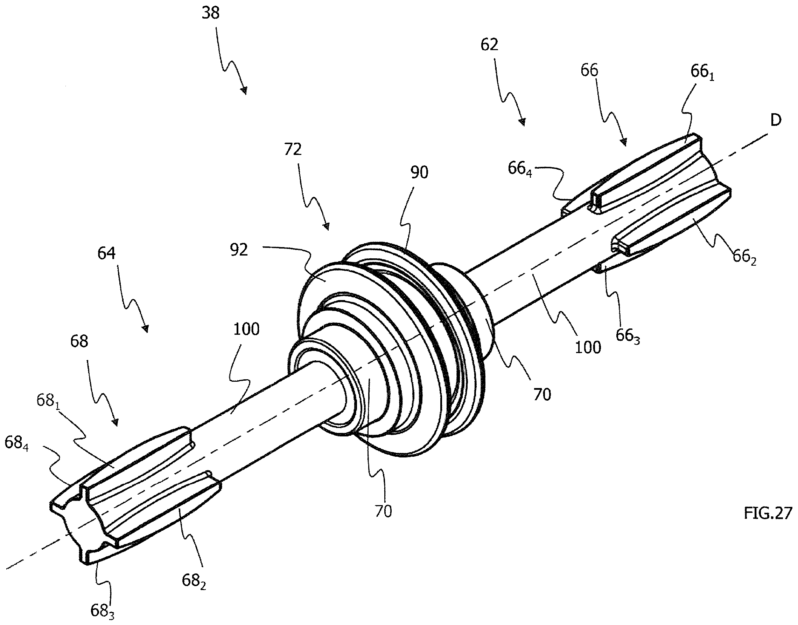

Figur 27 zeigt eine perspektivische Ansicht der Antriebseinrichtung 38. Die Antriebseinrichtung 38 ist um die Drehachse D drehbar, die der Längsachse der Antriebseinrichtung 38 entspricht. Die Antriebseinrichtung 38 weist einen Antriebsabschnitt 72 und zwei Kopplungselemente 62 und 64 auf. Die Kopplungselemente 62 und 64 haben jeweils einen Lagerabschnitt 70 und einen Kopplungsabschnitt 66 und 68. Die Kopplungsabschnitte 66 und 68 sind über die Verbindungsabschnitte 100 mit den Lagerabschnitten 70 verbunden. Die Kopplungsabschnitte 66 und 68 weisen die in radialer Richtung vorstehenden Vorsprünge 66₁, 66₂, 66₃, 66₄ und 68₁, 68₂, 68₃, 68₄ auf. Die Kopplungsabschnitte 66 und 68 können mit ihren Vorsprüngen 66₁, 66₂, 66₃, 66₄ und 68₁, 68₂, 68₃, 68₄ mit einer Antriebswelle 14 (siehe Figur 1) drehmomentübertragend gekoppelt werden. Die Kopplungsabschnitte 66 und 68 und ein Abschnitt der Antriebswelle 14 (siehe Figur 1) können komplementär ausgebildet sein. Die Kopplungsabschnitte 66 und 68 und der entsprechende Abschnitt einer Antriebswelle 14 können komplementär ausgebildet sein, sodass sie miteinander in Eingriff gebracht werden können. Die Kopplungsabschnitte 66 und 68 und/oder der Abschnitt der Antriebswelle 14 können derart ausgebildet, dass montagebedingte Abstandstoleranzen zwischen benachbarten Schwenkeinheiten 10 bzw. nebeneinander angeordneten Pfosten 12 in begrenztem Maße kompensiert werden. Beispielsweise können die Kopplungselemente 66 und 68 und die Antriebswelle derart ausgebildet sein, dass sie miteinander in Eingriff stehend in Richtung der Schwenkachse eine Verschiebung relativ zueinander zu lassen, um die genannten Toleranzen kompensieren zu können.

Der Antriebsabschnitt 72 weist zwei Verbindungselemente 90 und 92 auf. Die Verbindungselemente 90 und 92 können einstückig mit den Kopplungselementen 62 und 64 und/oder dem Antriebselement 74 und/oder dem Halteelement 94 ausgebildet sein. Die Verbindungselemente 90 und 92 sind scheibenförmig ausgebildet.

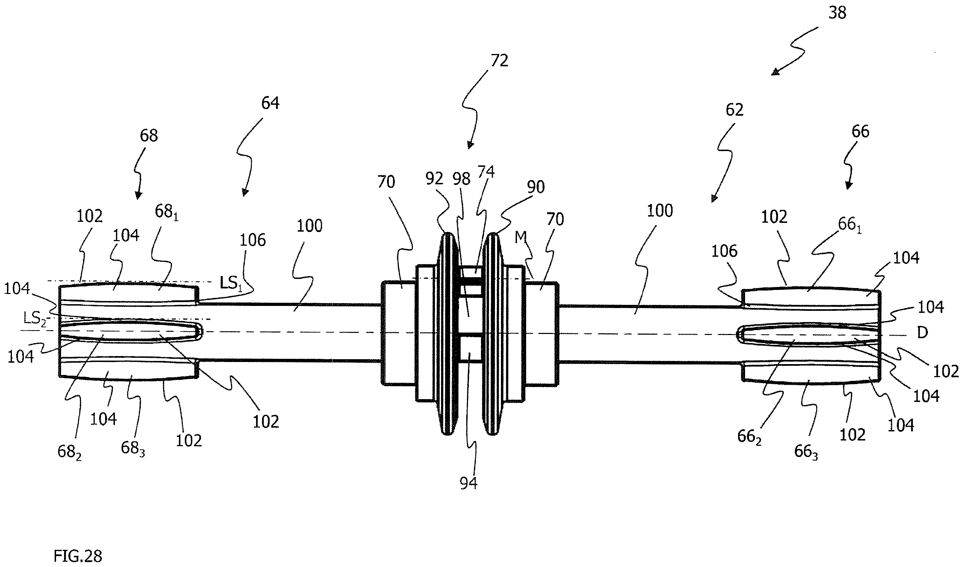

Figur 28 zeigt eine Vorderansicht der Antriebseinrichtung 38. Zwischen den scheibenförmigen Verbindungselementen 90 und 92 erstrecken sich das Antriebselement 74 und das Halteelement 94. Das Verbindungselement 74 ist exzentrisch angeordnet. Das Halteelement 94 weist eine halbkreisförmige Außenkontur auf. Die Antriebseinrichtung 38 ist um die Drehachse D drehbar. Die Drehachse D erstreckt sich durch den Mittelpunkt der halbkreisförmigen Außenkontur des Halteelements 94. Zwischen dem Antriebselement 74 und dem Halteelement 94 ist ein Freiraum 98 erkennbar. Das Halteelement 94 ist im Querschnitt in Form eines Kreissektors mit einer halbkreisförmigen Außenkontur (wird im Folgenden als "halbkreissektorförmig" bezeichnet) ausgebildet und koaxial mit den Kopplungselementen 62 und 64 angeordnet. Das Antriebselement 74 ist exzentrisch angeordnet. Die Längsachse M des Antriebselements 74 erstreckt sich parallel aber in radialer Richtung versetzt zu der Drehachse D der Antriebseinrichtung 38.

Die Kopplungsabschnitte 66 und 68 weisen die in radialer Richtung vorstehenden Vorsprünge 66₁, 66₂, 66₃, 66₄ und 68₁, 68₂, 68₃, 68₄ auf, die die Antriebseinrichtung 38 mit einer Antriebswelle 14 (siehe Figur 1) drehmomentübertragend koppeln können. Die Vorsprünge 66₄ und 68₄ sind in Figur 28 nicht gezeigt (siehe Figur 27). Die nachstehenden Ausführungen gelten analog auch für die Vorsprünge 66₄ und 68₄, die in Figur 28 nicht gezeigt sind. Die Vorsprünge 66₁, 66₂, 66₃ und 68₁, 68₂, 68₃ sind zum Ausgleich von Winkelversätzen zwischen der Antriebseinrichtung 38 und der Antriebswelle 14 ballig ausgebildet. Die Vorsprünge 66₁, 66₂, 66₃ und 68₁, 68₂, 68₃ weisen dazu eine gewölbte radiale Außenfläche 102 auf. Die Außenfläche 102 ist in Richtung der Drehachse D gewölbt. Die Wölbung wird durch die in Figur 28 eingetragene Linie LS₁ verdeutlicht, die sich parallel zur Drehachse D erstreckt. Weiterhin weisen die Vorsprünge 66₁, 66₂, 66₃ und 68₁, 68₂, 68₃ Seitenflächen 104 auf, die gewölbt sind und sich in radialer Richtung erstrecken. Die Seitenflächen 104 erstrecken sich in radialer Richtung zwischen der Außenfläche 102 und dem Fuß 106 des jeweiligen Vorsprungs 66₁, 66₂, 66₃ und 68₁, 68₂, 68₃. Der Fuß 106 der Vorsprünge 66₁, 66₂, 66₃ und 68₁, 68₂, 68₃ ist in Figur 28 aus Gründen der Übersichtlichkeit nur bei den Vorsprüngen 66₁ und 68₁ mit einem Bezugszeichen versehen. Die Seitenfläche 104 ist in Richtung der Drehachse D gewölbt, wie durch die in Figur 28 an einer der Seitenflächen 104 eingetragene Linie LS₂ angezeigt wird. Die Linie LS₂ erstreckt sich parallel zur Drehachse D. Durch die Wölbung der radialen Außenflächen 102 und die gewölbten Seitenflächen 104 der Vorsprünge 66₁, 66₂, 66₃, 66₄ und 68₁, 68₂, 68₃, 68₄ können Winkelversätze zwischen der Antriebseinrichtung 38 und der Antriebswelle 14 ausgeglichen werden.

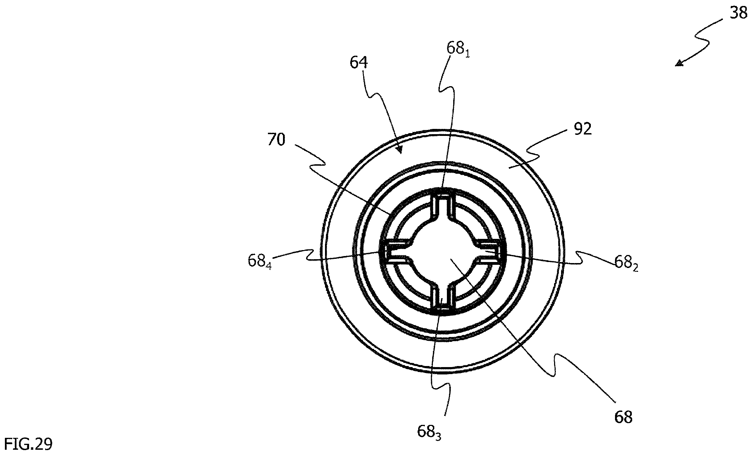

Figur 29 zeigt eine Seitenansicht der Antriebseinrichtung 38, in der das Kopplungselement 64, dessen Kopplungsabschnitt 68 und das Verbindungselement 92 gezeigt sind. Das Verbindungselement 92 ist scheibenförmig ausgebildet. Der Kopplungsabschnitt 68 weist die in radialer Richtung vorstehenden Vorsprünge 68₁, 68₂, 68₃, 68₄ auf. Die Vorsprünge 68₁, 68₂, 68₃, 68₄ sind um 90° zueinander versetzt angeordnet.

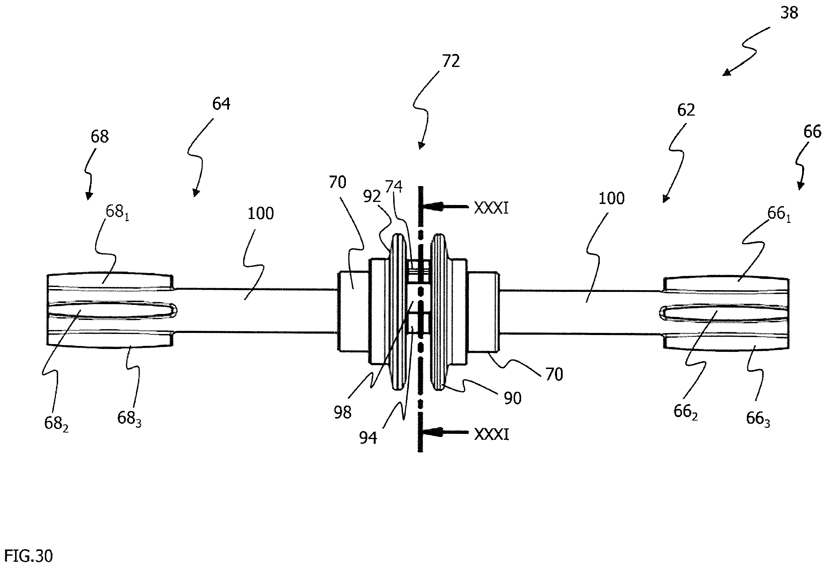

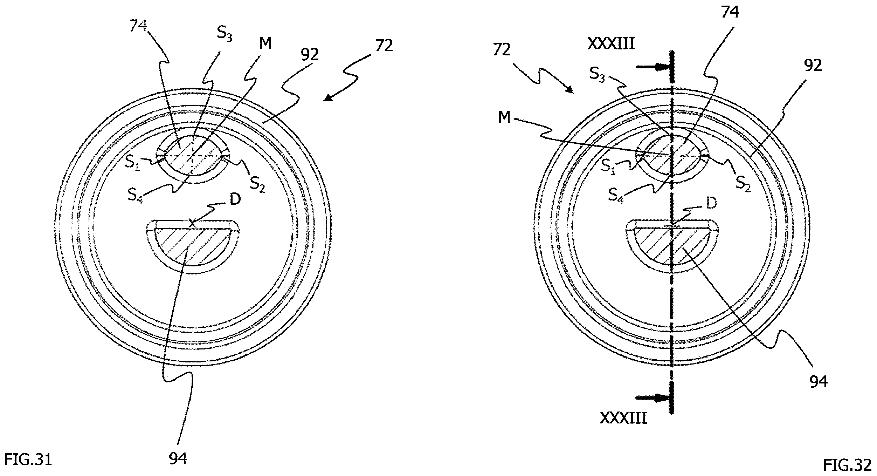

Figur 30 entspricht der Vorderansicht der Antriebseinrichtung 38 gemäß Figur 28, mit dem Unterschied, dass die Schnittlinie XXXI-XXXI eingetragen wurde. Figur 31 zeigt eine Schnittansicht entlang der Schnittlinie XXXI-XXXI in Figur 30. In Figur 31 sind das scheibenförmige Verbindungselement 92 das Antriebselement 74 und das Halteelement 94 gezeigt. Das Halteelement 94 ist im Querschnitt halbkreissektorförmig ausgebildet.

Das Antriebselement 74 weist einen von einem Kreisquerschnitt abweichenden und zumindest abschnittsweise gekrümmten Querschnitt auf. Der Querschnitt des Antriebselements 74 ist in radialer Richtung bezogen auf die Drehachse D verglichen mit einem Kreisquerschnitt reduziert ausgebildet. Der Querschnitt des Antriebselements 74 kann als oval oder auch ellipsenförmig bezeichnet werden. Wie in den Figuren 31 und 32 gekennzeichnet, hat der Querschnitt des Antriebselements 74 vier Scheitelpunkte S₁, S₂, S₃ und S₄. Zwischen den Scheitelpunkten S₁ und S₂ weist das Antriebselement 74 in einer Richtung quer zur radialen Richtung seine größte Erstreckung auf. Anders ausgedrückt legt der Abstand zwischen den Scheitelpunkten S₁ und S₂ die größte Erstreckung des Antriebselements 74 fest. Die Scheitelpunkte S₃ und S₄ liegen in radialer Richtung in einer Flucht. Der Abstand zwischen den Scheitelpunkten S₃ und S₄ ist kleiner als der Abstand zwischen den Scheitelpunkten S₁ und S₂. Durch den geringeren Abstand zwischen den in radialer Richtung in einer Flucht liegenden Scheitelpunkten S₃ und S₄ wird deutlich, dass der Querschnitt des Antriebselements 74 in radialer Richtung reduziert ist.

Durch den in radialer Richtung reduzierten Querschnitt des Antriebselements 74 kann der Eingriff des Antriebselements 74 in eine der Antriebsausnehmungen 42 sichergestellt werden, sodass die Funktion der Schwenkeinheit 10 dauerhaft gewährleistet werden kann. Mit dem in radialer Richtung reduzierten Querschnitt des Antriebselements 74 kann das Antriebselement 74 selbst dann sicher in die entsprechende Antriebsausnehmung 42 eingreifen, wenn sich der radiale Abstand zwischen der Antriebseinrichtung 38 und dem Antriebsbogen vergrößert hat. Es können insbesondere Toleranzschwankungen innerhalb der Schwenkeinheit 10 kompensiert werden. Sollte sich aufgrund von Toleranzschwankungen und/oder elastischer Deformation der radiale Abstand zwischen der Antriebseinrichtung 38 und dem Antriebsbogen 24 vergrößern, kann durch den ovalen Querschnitt des Antriebselements 74 das Antriebselement 74 selbst in diesem Fall noch sicher in die Antriebskontur 40 des Antriebsbogens 24 eingreifen.

Ferner kann sich der Abstand zwischen den gegenüberliegenden Flanken der Antriebsausnehmungen 42 (siehe beispielsweise Figuren 24 und 26) in radialer Richtung vergrößern. Die Antriebsausnehmungen 42 weiten sich in radialer Richtung auf. Auch dadurch kann das sichere "Einfädeln" bzw. der sichere Eingriff des Antriebselements 74 in eine der Antriebsausnehmungen 42 selbst bei einem vergrößerten radialen Abstand zwischen der Antriebseinrichtung 38 und der dem Antriebsbogen 24 sichergestellt werden.

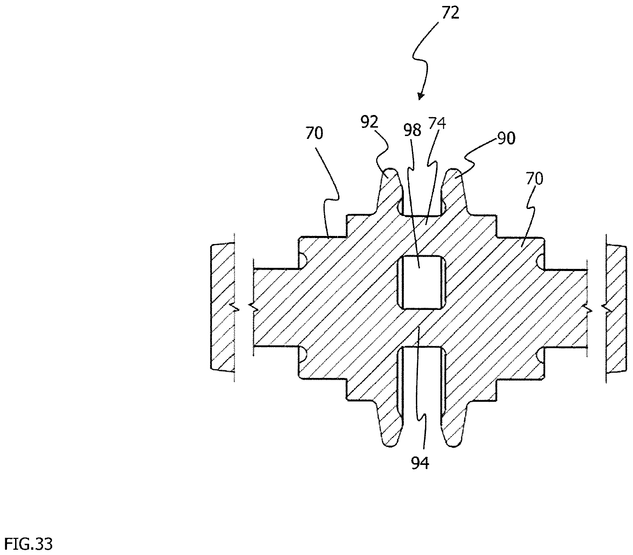

Figur 32 entspricht Figur 31, wobei in Figur 32 die Schnittlinie XXXIII-XXXIII eingetragen wurde. Figur 33 zeigt eine Schnittansicht entlang der Schnittlinie XXXIII-XXXIII in Figur 32. Der Antriebsabschnitt 72 weist zwei Verbindungselemente 90 und 92 auf. Die Verbindungselemente 90 und 92, das Antriebselement 74 und das Halteelement 94 können einstückig ausgebildet sein. Das Antriebselement 74 und das Halteelement 94 erstrecken sich zwischen den scheibenförmigen Verbindungselementen 90 und 92. Das Antriebselement 74 ist in radialer Richtung versetzt zu dem Halteelement 94 angeordnet, so dass der Freiraum 98 gebildet wird.

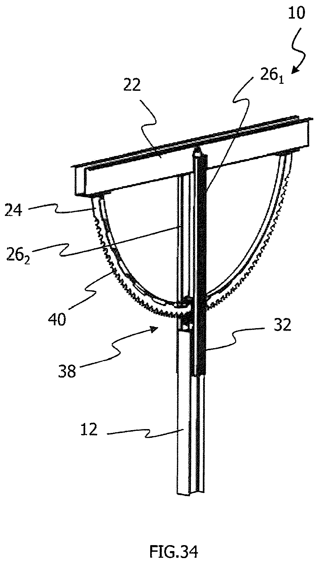

Die im Folgenden beschriebenen Figuren 34 bis 42 zeigen eine Schwenkeinheit 10 gemäß einer dritten Ausführungsform. Für gleichartige oder gleichwirkende Merkmale oder Komponenten werden die selben Bezugszeichen wie bei den ersten beiden Ausführungsformen verwendet. Zur Vermeidung von Wiederholungen werden im Folgenden die Unterschiede zwischen der dritten Ausführungsform und den vorherigen Ausführungsformen im Detail beschrieben. Komponenten und Merkmale, die bereits bezüglich der ersten und/oder der zweiten Ausführungsform im Detail beschrieben wurden, werden nicht erneut detailliert beschrieben. Die Beschreibung dieser Komponenten und Merkmale gilt analog auch für die dritte Ausführungsform.

Figur 34 zeigt eine perspektivische Ansicht einer Schwenkeinheit 10 gemäß einer dritten Ausführungsform im an einem Pfosten 12 angebrachten Zustand. Die Schwenkeinheit 10 weist einen Querträger 22, einen daran angebrachten Antriebsbogen 24 und zwei Trägerelemente 26₁ und 26₂ auf. Die Antriebseinrichtung 38 ist in Figur 34 lediglich andeutungsweise erkennbar. Die Schwenkeinheit 10 ist über die Trägerelemente 26₁ und 26₂ mit dem Pfosten 12 verbunden. Die Enden 32 der Trägerelemente 26₁ und 26₂ bilden einen Verbindungsabschnitt, über den die Trägerelemente 26₁ und 26₂ miteinander und mit dem Pfosten12 verbunden sind. Die Pfosten 12 gemäß dieser Ausführungsform haben einen H-förmigen Querschnitt. Die Trägerelemente 26₁ und 26₂ stützen sich über in Figur 34 nicht erkennbare Distanzstücke an dem Pfosten 12 ab.

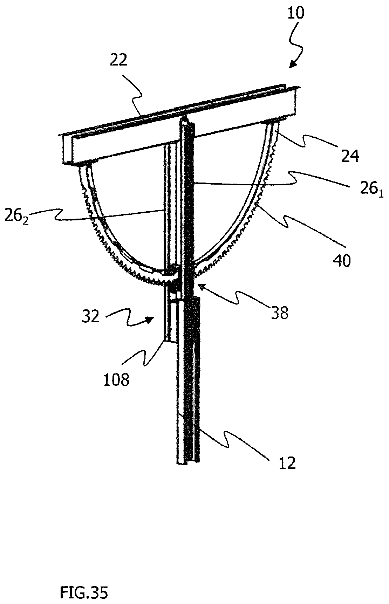

Figur 35 zeigt eine weitere perspektivische Ansicht einer Schwenkeinheit 10 gemäß einer dritten Ausführungsform im an einem Pfosten 12 angebrachten Zustand. Der wesentliche Unterschied zu der Darstellung gemäß Figur 34 ist in dem Querschnitt des Pfostens 12 zu sehen. Gemäß Figur 35 ist der Pfosten im Querschnitt C-förmig ausgebildet und hat keinen H-förmigen Querschnitt wie der Pfosten 12 gemäß Figur 34. Das Trägerelement 26₂ stützt sich über ein Distanzstück 108 an dem Pfosten 12 ab. Das Trägerelement 26₁ liegt an dem Pfosten 12 an. Wie erwähnt, sind auch in Figur 34 Distanzstücke vorgesehen, die beiderseits an dem Pfosten 12 angeordnet und gleich groß sind. Diese Distanzstücke sind in Figur 34 nicht gezeigt.

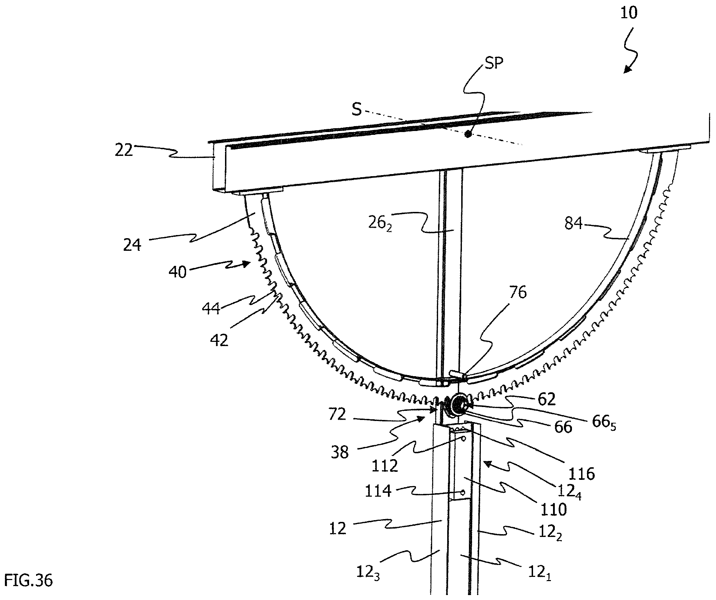

Figur 36 zeigt eine vergrößerte perspektivische Ansicht der Schwenkeinheit 10, wobei das Trägerelement 26₁ ausgeblendet wurde. In Figur 36 ist der H-förmige Querschnitt des Pfostens 12 deutlich erkennbar. Der H-förmige Querschnitt des Pfosten 12 setzt sich aus einem Querschenkel 12₁ und zwei Seitenschenkeln 12₂ und 12₃ zusammen, die über den Querschenkel 12₁ miteinander verbunden werden. An dem Querschenkel 12₁ liegt beidseitig ein Distanzstück 110 an. Die Distanzstücke 110, das Trägerelement 26₂ und auch das in Figur 36 nicht gezeigte Trägerelement 26₁ sind über Verbindungselemente 112 und 114 mit dem Pfosten 12 verbunden. Dazu weist der Querschenkel 12₁ des Pfostens 12 mehrere Öffnungen 116 auf, die in Figur 36 andeutungsweise oberhalb des Distanzstücks 110 erkennbar sind. Die Öffnungen 116 sind in einem Endabschnitt 12₄ des Pfostens 12 ausgebildet, der zur Verbindung mit der Schwenkeinheit 10 dient. Der Endabschnitt 12₄ bildet einen Verbindungsabschnitt zur Verbindung des Pfostens 12 mit den Trägerelementen 26₁ und 26₂.

Der Querträger 22 weist einen U-förmigen oder hutförmigen Querschnitt auf. An dem Querschenkel der U-Form ist der Antriebsbogen 24 befestigt. Der Antriebsbogen 24 weist die Antriebskontur 40 auf. Die Antriebskontur 40 setzt sich aus mehreren Antriebsausnehmungen 42 und mehreren Halteausnehmungen 44 zusammen, die in Umfangsrichtung des Antriebsbogens 24 wechselweise angeordnet sind. Die Antriebseinrichtung 38 steht über ihren Antriebsabschnitt 72 mit der Antriebskontur 40 des Antriebsbogens 24 in Eingriff.

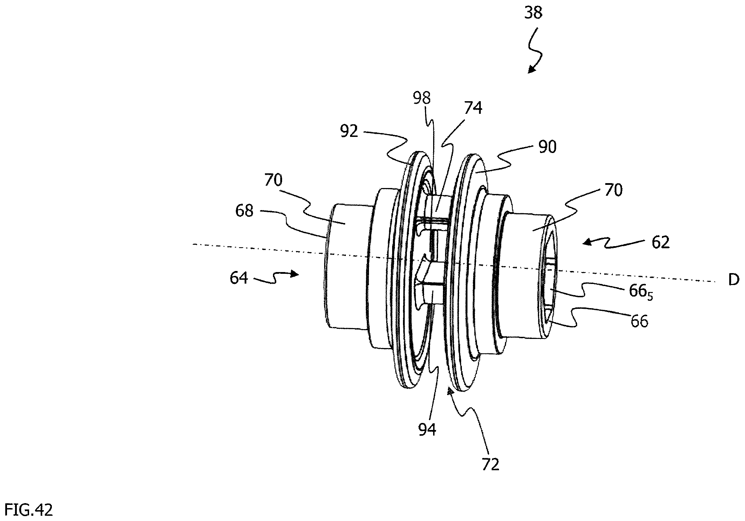

In Figur 36 ist der Kopplungsabschnitt 66 des Kopplungselements 62 erkennbar. Der Kopplungsabschnitt 66 weist eine Ausnehmung 66₅ auf, die einen sechskantförmigen Querschnitt hat. Gleiches gilt für den Kopplungsabschnitt 68 des Kopplungselements 64, das jedoch in Figur 36 nicht gezeigt ist (siehe Figur 42). Der Antriebsbogen 24 kann sich über sein Basiselement 84 in radialer Richtung an dem Führungselement 76 abstützen. Das Führungselement 76 ist in Form eines radialen Anschlags mit kreisförmigem Querschnitt ausgebildet.

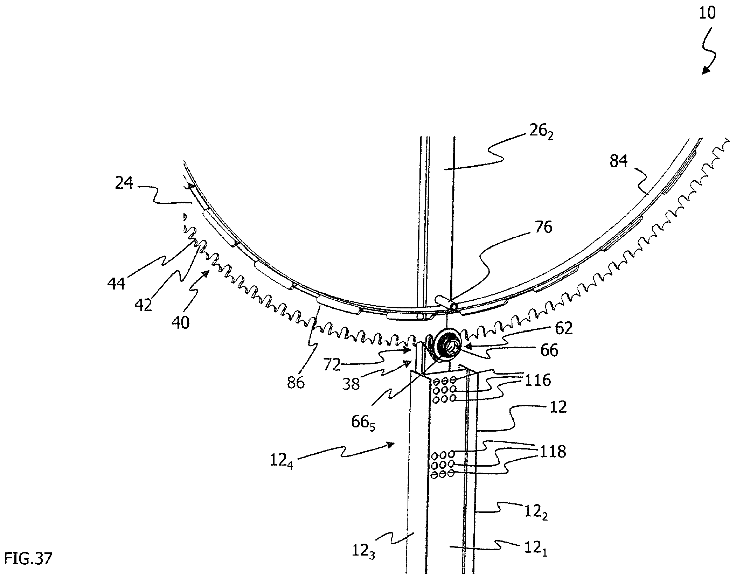

Figur 37 zeigt einen vergrößerten Ausschnitt einer Seitenansicht, in dem zusätzlich zu dem Trägerelement 26₁ auch das Distanzstück 110 ausgeblendet wurde. In Figur 37 sind die Öffnungen 116 und 118 an dem Querschenkel 12₁ des Pfostens 12 erkennbar. Die Öffnungen 116 und 118 sind in einem Endabschnitt 12₄ des Pfostens 12 ausgebildet, der zur Verbindung mit der Schwenkeinheit 10 dient. Der Endabschnitt 12₄ bildet einen Verbindungsabschnitt zur Verbindung mit den Trägerelementen 26₁ und 26₂. Der Endabschnitt 12₄ des Pfostens 12 wird mit dem einen Verbindungsabschnitt bildenden Ende 32 (in Figur 37 nicht gezeigt, siehe Figuren 34 und 35) der Trägerelemente 26₁ und 26₂ verbunden. Aus Gründen der Übersichtlichkeit sind jeweils nur drei Öffnungen 116 bzw. 118 bezeichnet. Die Öffnungen 116 und 118 sind in vertikaler Richtung zueinander versetzt. In jeweils eine oder mehrere der Öffnungen 116, 118 können die in den Figur 36 gezeigten Verbindungselemente 112 und 114 eingesetzt werden, um eine Verbindung zwischen den Trägerelementen 26₁ (in Figur 37 nicht gezeigt) und 26₂, den Distanzstücken 110 (in Figur 37 nicht gezeigt) und dem Pfosten 12 herzustellen. Es stehen mehrere Öffnungen 116, 118 zur Herstellung der Verbindung zwischen dem Pfosten 12 und den Trägerelementen 26₁ (nicht gezeigt) und 26₂ zur Auswahl. Durch die geeignete Auswahl der Öffnungen 116, 118, die zur Herstellung einer Verbindung zwischen den Trägerelementen 26₁ (in Figur 37 nicht gezeigt) und 26₂ und dem Pfosten 12 verwendet werden sollen, können Versätze in horizontaler Richtung und vertikaler Richtung ausgeglichen werden. Derartige Versätze können insbesondere bei der Verbindung einer Schwenkeinheit 10 mit einer weiteren Schwenkeinheit (siehe Figur 1) oder einem Antrieb bei Montagetoleranzen und Unebenheiten im Gelände vorliegen auftreten oder wenn benachbarte Pfosten oder Schwenkeinheiten nicht in einer Flucht liegen.

In Figur 37 ist ferner der Kopplungsabschnitt 66 des Kopplungselements 62 erkennbar. Der Kopplungsabschnitt 66 weist eine Ausnehmung 66₅ auf, die einen sechskantförmigen Querschnitt hat. In die Ausnehmung 66₅ des Kopplungsabschnitts 66 kann ein Adapter oder direkt eine Antriebswelle (siehe Figur 1) mit einem Abschnitt oder Vorsprung mit einem sechskantförmigen Querschnitt eingesteckt werden und die Antriebseinrichtung 38 antreiben. Gleiches gilt für den Kopplungsabschnitt 68 des in Figur 37 nicht gezeigten Kopplungselements 64 (siehe Figur 42).

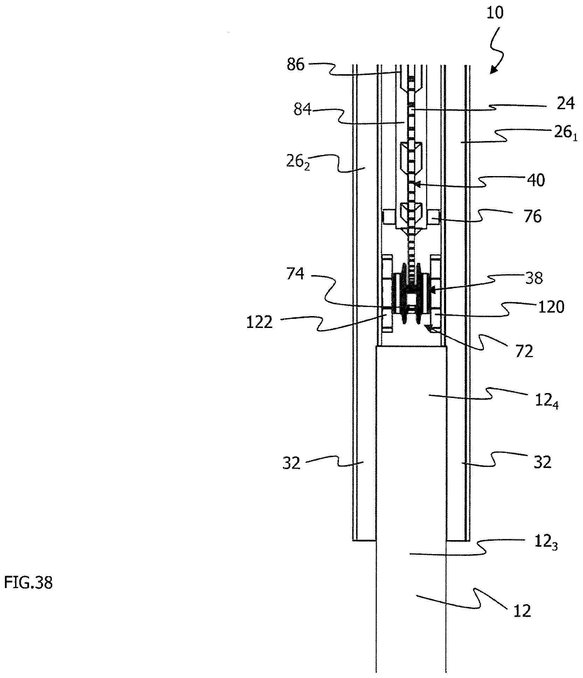

Figur 38 zeigt einen Ausschnitt einer Seitenansicht der Schwenkeinheit 10 im an einem Pfosten 12 angebrachten Zustand. Der Pfosten 12 weist einen H-förmigen Querschnitt auf. Die Antriebseinrichtung 38 erstreckt sich zwischen den beiden Trägerelementen 26₁ und 26₂. Die Trägerelemente 26₁ und 26₂ weisen jeweils eine Lagerstelle 120 und 122 auf, an denen die Antriebseinrichtung 38 mit ihren in Figur 38 nicht gezeigten Lagerabschnitten gelagert ist. Die Lagerstellen 120 und 122 sind in Form von Lagerflanschen ausgebildet, die mit den Trägerelementen 26₁ und 26₂ verbunden sind. Die Lagerflansche bzw. die Lagerstellen 120 und 122 nehmen die Lagerabschnitte (nicht gezeigt) der Antriebseinrichtung 38 abschnittsweise auf. Die Lagerstellen 120 und 122 können Gleitlager aufweisen.

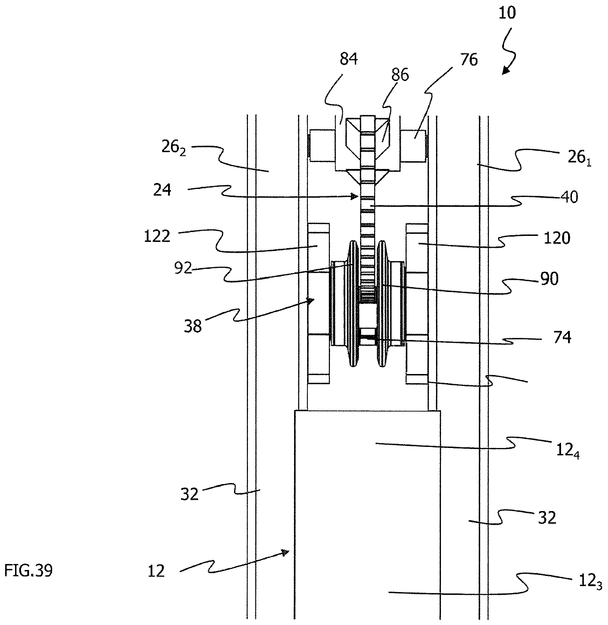

Figur 39 zeigt einen vergrößerten Ausschnitt der Ansicht gemäß Figur 38. Die Antriebseinrichtung 38 ist mit ihren in Figur 39 nicht gezeigten Lagerabschnitten in den Lagerstellen 120, 122 an den Trägerelementen 26₁ und 26₂ gelagert. Der Antriebsbogen 24 verläuft ebenfalls zwischen den beiden Trägerelementen 26₁ und 26₂. Der Antriebsbogen 24 kann sich über seinen Basisabschnitt 84 an dem Führungselement 76 abstützen, das in Form eines radialen Anschlags mit kreisförmigem Querschnitt ausgebildet ist. Insbesondere die Antriebskontur 40 des Antriebsbogens 24 verläuft zwischen den beiden Verbindungselementen 90 und 92 der Antriebseinrichtung 38. Zwischen den Verbindungselementen 90 und 92 erstreckt sich ebenfalls das Antriebselement 74 und das in Figur 39 nicht erkennbare Halteelement 94. Das in Figur 39 nicht erkennbare Halteelement 94 befindet sich in der in Figur 39 gezeigten Stellung der Antriebseinrichtung 38 in Eingriff mit der Antriebskontur 40 und insbesondere in Eingriff mit einer Halteausnehmung 44 (siehe Figur 37). In den Figuren 38 und 39 befindet sich der Pfosten 12 im Wesentlichen mittig zwischen den beiden Trägerelementen 26₁ und 26₂.

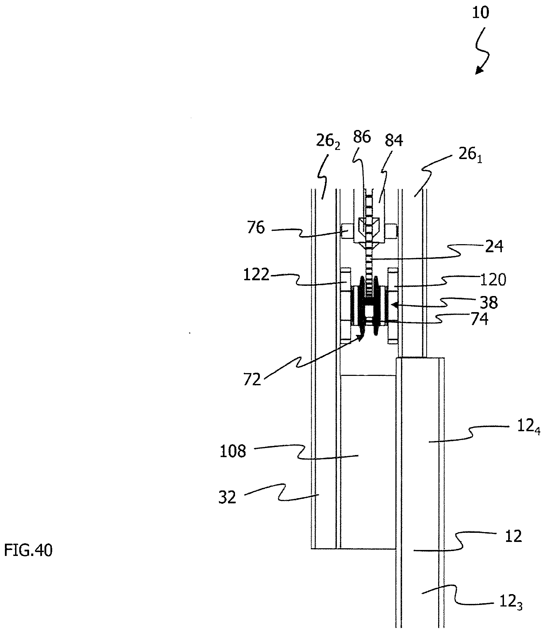

Figur 40 zeigt einen Ausschnitt einer Seitenansicht der Schwenkeinheit 10 in am Pfosten 12 angebrachten Zustand. Im Unterschied zu den Figuren 38 und 39 weist der Pfosten 12 hier einen C-förmigen Querschnitt auf. Das Trägerelement 26₂ stützt sich über ein Distanzstück 108 an dem Pfosten 12 ab, wobei in Figur 40 der Seitenschenkel 12₃ des C- förmigen Pfostens 12 erkennbar ist. Das Ende 32 (nicht erkennbar) des Trägerelements 26₁ ist in dem C-Profil des Pfostens 12 aufgenommen und wie das Trägerelement 26₂ mit dem Endabschnitt 12₄ des Pfostens 12 verbunden.

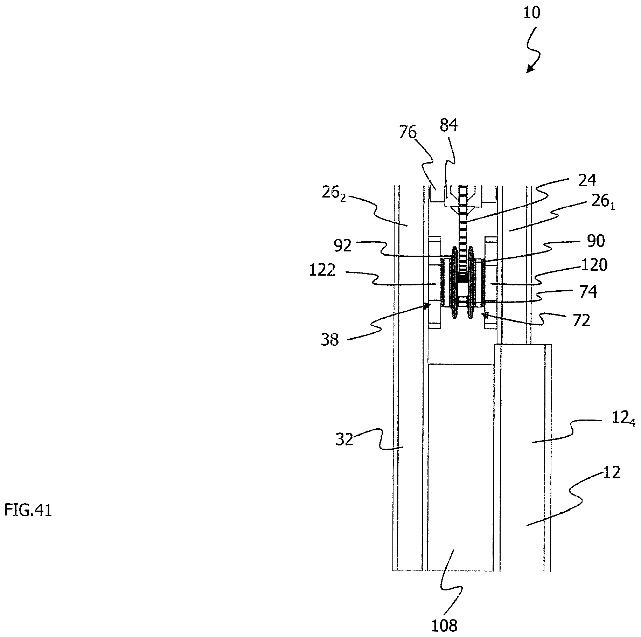

Figur 41 zeigt einen vergrößerten Ausschnitt der Ansicht gemäß Figur 40. Das Trägerelement 26₂ stützt sich über das Distanzstück 108 an dem Pfosten 12 ab. Das Trägerelement 26₁, das Distanzstück 108 und das Trägerelement 26₂ sind über in Figur 41 nicht gezeigten Verbindungselementen miteinander und mit dem Pfosten 12 verbunden.

Ferner sind in Figur 41 die an den Trägerelementen 26₁ und 26₂ vorgesehenen Lagerstellen 120 und 122 gezeigt, an denen die Antriebseinrichtung 38 gelagert ist. Die Antriebseinheit 38 erstreckt sich zwischen den Trägerelementen 26₁ und 26₂ und ist mit ihren Lagerabschnitten (nicht gezeigt) in den Lagervorsprüngen 120, 122 aufgenommen.

Figur 42 zeigt eine perspektivische Ansicht der Antriebseinrichtung 38. Die Antriebseinrichtung 38 weist Kopplungselemente 62 und 64 auf, zwischen denen ein Antriebsabschnitt 72 angeordnet ist. Die Verbindungselemente 90 und 92 verbinden die Kopplungselemente 62 und 64 mit dem Antriebselement 74 und dem Halteelement 94. Das Antriebselement 74 und das Halteelement 94 erstrecken sich zwischen den Verbindungselementen 90 und 92 und sind durch den Freiraum 98 voneinander beabstandet.

Die Kopplungselemente 62 und 64 weisen jeweils einen Lagerabschnitt 70 auf, mit dem die Antriebseinrichtung 38 in den Lagerstellen 120 und 122 (siehe Figuren 38 bis 41) aufgenommen werden kann. Radial einwärts der Lagerabschnitte 70 ist der Kopplungsabschnitt 66 an dem Kopplungselement 62 erkennbar. Der Kopplungsabschnitt 66 weist eine Ausnehmung 66₅ auf. Die Ausnehmung 66₅ hat einen sechskantförmigen Querschnitt. In dem Kopplungsabschnitt 66 kann ein sechskantförmiger Vorsprung einer Antriebswelle 14, eines Adapters oder eines Antriebs eingesteckt werden, um die Antriebseinrichtung 38 drehmomentübertragend mit einem Antrieb zu koppeln (siehe Figuren 1 und 2). Auch das Kopplungselement 64 weist einen derartigen Kopplungsabschnitt 68 mit einer Ausnehmung auf, die jedoch in Figur 42 nicht gezeigt ist.

Im Folgenden wird die Funktion der Schwenkeinheit 10 erläutert. Die Schwenkeinheit 10 kann über eine in Figur 1 gezeigte Antriebswelle 14 oder einen Antrieb angetrieben werden. Die Antriebswelle 14 kann dazu mit der Antriebseinrichtung 38 über eines der Kopplungselemente 62 oder 64 drehmomentübertragend gekoppelt werden. Die Antriebseinrichtung 38 ist um die Drehachse D (siehe Figuren 9, 11, 15, 16, 24, 26 bis 28, 31, 32 und 42) drehbar in den Befestigungselementen 34 und 36 bzw. in den Lagerstellen 120 und 122 gelagert. Die Drehachse D der Antriebseinrichtung 38 erstreckt sich im Wesentlichen parallel zur Schwenkachse S. Eine mit der Antriebseinrichtung 38 verbundene Antriebswelle 14 kann sich ebenfalls im Wesentlichen parallel zur Schwenkachse S erstrecken.

Das über eines der Kopplungselemente 62 und 64 auf die Antriebseinrichtung 38 übertragene Antriebsmoment versetzt die Antriebseinrichtung 38 in Rotation. Das Antriebselement 74 dreht sich dadurch auf einer Kreisbahn mit einem vorbestimmten radialen Abstand um die Drehachse D. Die Antriebseinrichtung 38 ist über ihr Antriebselement 74 mit dem Antriebsbogen 24 drehmomentübertragend gekoppelt, sodass durch eine Drehbewegung der Antriebseinrichtung 38 um die Drehachse D der Antriebsbogen 24 um die Schwenkachse S schrittweise verschwenkt werden kann. Das Antriebselement 74 kann durch die von der Antriebseinrichtung 38 ausgeführte Drehbewegung in eine der Antriebsausnehmungen 42 eingreifen, den Antriebsbogen 24 mitnehmen und die entsprechende Antriebsausnehmung 42 wieder verlassen. Auf diese Weise wird ein Verstellschritt um die Schwenkachse S ausgeführt und der Antriebsbogen 24 mit dem daran angebrachten Querträger 22 in eine neue Schwenkstellung überführt. Zwischen dem Eingreifen in die Antriebsausnehmung 42 und dem Verlassen der Antriebsausnehmung 42 drückt das Antriebselement 74 gegen eine Flanke der Antriebsausnehmung 42. Dadurch wird ein Drehmoment auf den Antriebsbogen 24 übertragen, sodass der Verstellschritt des Antriebsbogens 24 und des Querträgers 22 um die Schwenkachse S ausgeführt wird.

Durch die Bewegung des Antriebselements 74 und des Antriebsbogen 24 gelangt das Halteelement 94 der Antriebseinrichtung 38 mit einer Halteausnehmung 44 in Eingriff. Das Halteelement 94 greift in eine zu der Antriebsausnehmung 42, die das Antriebselement 74 gerade verlassen hat, benachbarte Halteausnehmung 44 ein. Das Halteelement 94 kann sich in der entsprechenden Halteausnehmung 44 drehen. Das Halteelement 94 greift mit einem ersten Abschnitt seines Querschnitts in die Halteausnehmung 44 ein, wobei sich dieser Abschnitt aufgrund der Drehbewegung der Antriebseinrichtung 38 mit dem Halteelement 94 kontinuierlich vergrößert. Durch den Eingriff des Halteelements 94 in die Halteausnehmung 44 kann ein Verdrehen bzw. Verschwenken des Querträgers 22 und des daran angebrachten Antriebsbogens 24 um die Schwenkachse S verhindert werden. Die Antriebseinrichtung 38 und der Antriebsbogen 24 befinden sich somit in einer Sperrstellung. Wird die Antriebseinrichtung 38 in diesem Zustand weiter angetrieben, verlässt das Halteelement 94 die Halteausnehmung 44 wieder und gibt den Antriebsbogen 24 frei für einen von dem Antriebselement 74 initiierten Verstellschritt.

Das Halteelement 94 kann, wenn es sich in Eingriff mit einer Halteausnehmung 44 befindet, eine Relativverdrehung zwischen dem Antriebsbogen 24 und dem damit verbundenen Querträger 22 und dem jeweiligen Trägerelement 26, 26₁, 26₂ im an wenigstens einem Pfosten 12 angebrachten Zustand verhindern. Sobald das Halteelement 94 auch nur mit einem (Teil-)Abschnitt in eine Halteausnehmung 44 eingreift, wird ein Verdrehen des Antriebsbogens 24 um die Schwenkachse S verhindert, d.h. eine vollständige Aufnahme des Querschnitts des Halteelements 94 in einer Halteausnehmung 44 ist zum Verhindern einer Verdrehung des Antriebsbogens 24 somit nicht notwendig. Durch die wechselweise Anordnung der Antriebsausnehmungen 42 und der Halteausnehmung 44 können wechselweise ein von dem Antriebselement 74 initiierter Verstellschritt des Antriebsbogens 24 oder ein Halteschritt ausgeführt werden, in dem der Antriebsbogen 24 über das Halteelement 94 in einer Sperrstellung gehalten werden kann. Das Halteelement 94 kann ein unerwünschtes Verstellen der Schwenkeinheit 10 um die Schwenkachse S verhindern, ohne dass dadurch ein Torsionsmoment auf die Antriebswelle 14 und/oder den Antrieb übertragen werden würde.

Soll der Antriebsbogen 24 und der damit verbundene Querträger 22 jedoch weiter verschwenkt werden, wird die Antriebseinrichtung 38 weiter angetrieben, bis das Antriebselement 74 in die nächste Antriebsausnehmung 42 eingreift und ein weiterer Verstellschritt ausgeführt wird. Soll der Antriebsbogen 24 und der damit verbundene Querträger 22 in der eingestellten Stellung arretiert werden, wird die Antriebseinrichtung 38 in der Sperrstellung angehalten. In dieser Stellung befindet sich das Halteelement 94 zumindest abschnittsweise mit einer Halteausnehmung 44 in Eingriff.

Die Verbindungselemente 90 und 92 bilden eine Führung für den Antriebsbogen 24 in Richtung der Drehachse D bzw. der Schwenkachse S, die sich parallel zueinander erstrecken. Dazu schließen die Verbindungselemente 90 und 92 den Antriebsbogen 24 zwischen sich ein. Aufgrund der Verbindungselemente 90 und 92 kann der Antriebsbogen 24 in axialer Richtung dem Antriebselement 74 und auch dem Halteelement 94 nicht ausweichen. Der Antriebsbogen 24 wird somit durch die Verbindungselemente 90 und 92 somit in Eingriff mit dem Antriebselement 74 und dem Halteelement 94 gehalten. Durch die von den Verbindungselementen 90 und 92 bereitgestellte Führungsfunktion kann der Aufbau der Schwenkeinheit 10 erheblich vereinfacht werden.

Durch die Schwenkeinheit 10 kann ferner die Montage einer Nachführvorrichtung NV erheblich vereinfacht werden. Die Schwenkeinheit 10 kann vormontiert werden. Die vormontierte Schwenkeinheit 10 kann dann als eigenständige Einheit mit bereits im Boden verankerten Pfosten 12 verbunden werden. Die Pfosten 12 werden mit dem Ende 32 des jeweiligen Trägerelements 26, 26₁, 26₂ verbunden. Dies bildet den Abschluss der Montage der Schwenkeinheit 10 an dem Pfosten 12. Sollen mehrere Schwenkeinheiten 10 (siehe Figur 1) vorgesehen sein, werden diese Schwenkeinheiten 10 entsprechend der Schwenkachse S miteinander in Flucht gebracht und unter einander über die Antriebswellen 14 und die Rahmenelemente bzw. Tragschienen 16 und 18 verbunden. Jedes Kopplungselement 62 und 64 der Antriebseinrichtung 38 kann über eine Antriebswelle 14 mit einer weiteren Schwenkeinheit 10 oder einem Antrieb bzw. Motor verbunden werden. Die Enden der Antriebswellen 14 bzw. entsprechende Adapter und/oder die Kopplungselemente der Antriebseinrichtung 38 sind derart ausgeführt, dass sowohl Fluchtungsfehler zwischen Antriebseinrichtung 38 und Antriebswelle 14 als auch Abstandstoleranzen zwischen den Antriebseinrichtung 38 in Richtung der Schwenkachse S ausgeglichen werden können.

## Patentansprüche

1. Antriebsanordnung (38, 24), mit:
wenigstens einer um eine Drehachse (D) drehbaren Antriebseinrichtung (38), die wenigstens ein Antriebselement (74) und wenigstens ein Halteelement (94) aufweist, wobei das wenigstens eine Antriebselement (74) in radialer Richtung versetzt zu dem wenigstens einen Halteelement (94) angeordnet ist, und
wenigstens einer um eine Achse (S) dreh- oder schwenkbare Abtriebseinheit (24), wobei die Abtriebseinheit (24) wenigstens eine Antriebsausnehmung (42) und wenigstens eine Halteausnehmung (44) aufweist,
wobei das wenigstens eine Antriebselement (74) der wenigstens einen Antriebsausnehmung (42) zugeordnet ist und zum Antreiben der Abtriebseinheit (24) in die wenigstens eine Antriebsausnehmung (42) eingreift, und
wobei das wenigstens eine Halteelement (94) der wenigstens einen Halteausnehmung (44) zugeordnet ist und zum Halten der Abtriebseinheit (24) in einer eingestellten Position in die wenigstens eine Halteausnehmung (44) eingreift,
wobei das wenigstens eine Antriebselement (74) einen von einem Kreisquerschnitt abweichenden und zumindest abschnittsweise gekrümmten Querschnitt aufweist, wobei das wenigstens eine Antriebselement (74) bezogen auf die Drehachse (D) verglichen mit einem Kreisquerschnitt einen in radialer Richtung reduzierten Querschnitt aufweist,
wobei der Querschnitt des wenigstens einen Antriebselements (74) wenigstens einen ersten Scheitelpunkt (Si) und wenigstens einen zweiten Scheitelpunkt (S₂) aufweist, deren Abstand zueinander die größte Erstreckung des Antriebselements (74) festlegt, oder wobei der Querschnitt des wenigstens einen Antriebselements (74) wenigstens eine erste Kante und wenigstens eine zweite Kante aufweist, deren Abstand zueinander die größte Erstreckung des Antriebselements (74) festlegt,
**dadurch gekennzeichnet, dass**
der Querschnitt des wenigstens einen Antriebselements (74) wenigstens einen dritten Scheitelpunkt (S₃) und einen vierten Scheitelpunkt (S₄) aufweist, deren Abstand zueinander kleiner als der Abstand zwischen dem ersten Scheitelpunkt (S₁) oder der ersten Kante und dem zweiten Scheitelpunkt (S₂) oder der zweiten Kante ist.

2. Antriebsanordnung (38, 24) nach Anspruch 1,
wobei die wenigstens eine Antriebsausnehmung (42) sich in radialer Richtung nach außen oder innen aufweitet, um die Eintrittsöffnung für das wenigstens eine Antriebselement (74) festzulegen.

3. Antriebsanordnung (38, 24) nach einem der voranstehenden Ansprüche,
wobei die Drehachse (D) der Antriebseinrichtung (38) durch oder entlang des wenigstens einen Halteelements (94) verläuft.

4. Antriebsanordnung (38, 24) nach einem der voranstehenden Ansprüche,
wobei das wenigstens eine Halteelement (94) zumindest in einem Abschnitt eine Krümmung aufweist, die auf die Krümmung der wenigstens einen Halteausnehmung (94) abgestimmt ist.

5. Antriebsanordnung (38, 24) nach einem der voranstehenden Ansprüche,
wobei das wenigstens eine Antriebselement (74) und das wenigstens eine Halteelement (94) über wenigstens ein Verbindungselement (90, 92) miteinander verbunden sind.

6. Antriebsanordnung (38, 24) nach einem der voranstehenden Ansprüche,
wobei sich das wenigstens eine Antriebselement (74) und das wenigstens eine Halteelement (94) im Wesentlichen parallel zu der Drehachse (D) der Antriebseinrichtung (38) erstrecken.

7. Antriebsanordnung (38, 24) nach einem der voranstehenden Ansprüche,
wobei das wenigstens eine Antriebselement (74) einen ovalen oder ellipsenförmigen oder linsenförmigen Querschnitt aufweist.

## Claims

1. Drive arrangement (38, 24) with:
at least one drive device (38) pivotable about a rotational axis (D), comprising at least one drive member (74) and at least one holding member (94), wherein the at least one drive member (74) is disposed with an offset in the radial direction to the at least one holding member (94), and
at least one output unit (24) rotatable or pivotable about an axis (S), wherein the output member (24) comprises at least one drive recess (42) and at least one retaining recess (44),
wherein the at least one drive member (74) is assigned to the at least one drive recess (42) and engages with the at least one drive recess (42) to drive the output member (24), and
wherein the at least one holding member (94) is assigned to the at least one retaining recess (44) and engages with the at least one retaining recess (44) to keep the output member (24) in its set position,
wherein the at least one drive member (74) has a cross section deviating from a circular cross section and being curved at least in sections, wherein the at least one drive member (74) has, relating to a rotational axis (D), compared with a circular cross section, a cross section that is reduced in the radial direction,
wherein the cross section of the at least one drive member (74) has at least a first apex (S₁) and at least a second apex (S₂), wherein their distance to each other defines the largest extension of the drive member (74),
or wherein the cross section of the at least one drive member (74) has at least a first edge and at least a second edge, wherein their distance to each other defines the largest extension of the drive member (74),
**characterized in that**
the cross section of the at least one drive member (74) has at least a third apex (S₃) and a fourth apex (S₄), wherein their distance to each other is smaller than the distance between the first apex (S₁) or the first edge and the second apex (S₂) or the second edge.

2. Drive arrangement (38, 24) of claim 1,
wherein the at least one drive recess (42) widens in the radial direction outwardly or inwardly to define the entry opening for the at least one drive member (74).

3. Drive arrangement (38, 24) of any one of the preceding claims,
wherein the rotational axis (D) of the drive device (38) extends through or along the at least one holding member (94).

4. Drive arrangement (38, 24) of any one of the preceding claims,
wherein the at least one holding member (94) has a curvature in at least one section, which is adjusted to the curvature of the at least one retaining recess (94).

5. Drive arrangement (38, 24) of any one of the preceding claims,
wherein the at least one drive member (74) and the at least one holding member (94) are connected with each other via at least one connecting member (90, 92).

6. Drive arrangement (38, 24) of any one of the preceding claims,
wherein the at least one drive member (74) and the at least one holding member (94) substantially extend parallel to the rotational axis (D) of the drive device (38).

7. Drive arrangement (38, 24) of any one of the preceding claims,
wherein the at least one drive member (74) has an oval or elliptical or lenticular cross section.

## Revendications

1. Ensemble d'entraînement (38, 24), comportant :
au moins un dispositif d'entraînement (38) pouvant tourner autour d'un axe de rotation (D), qui comprend au moins un élément d'entraînement (74) et au moins un élément de maintien (94), dans lequel ledit au moins un élément d'entraînement (74) est disposé de manière décalée dans la direction radiale par rapport audit au moins un élément de maintien (94), et
au moins une unité entraînée (24) pouvant tourner ou pivoter autour d'un axe (S), dans lequel l'unité entraînée (24) comprend au moins un évidement d'entraînement (42) et au moins un évidement de maintien (44),
dans lequel ledit au moins un élément d'entraînement (74) est associé audit au moins un évidement d'entraînement (42) et s'engage dans ledit au moins un évidement d'entraînement (42) pour entraîner l'unité entraînée (24), et
dans lequel ledit au moins un élément de maintien (94) est associé audit au moins un évidement de maintien (44) et s'engage dans ledit au moins un évidement de maintien (44) pour maintenir l'unité entraînée (24) dans une position réglée,
dans lequel ledit au moins un élément d'entraînement (74) présente une section transversale différente d'une section transversale circulaire et courbe au moins sur certaines parties, ledit au moins un élément d'entraînement (74) présentant, par rapport à l'axe de rotation (D), une section transversale réduite dans la direction radiale par rapport à une section transversale circulaire,
dans lequel la section transversale dudit au moins un élément d'entraînement (74) comprend au moins un premier sommet (S₁) et au moins un deuxième sommet (S₂), dont la distance entre eux détermine la plus grande extension de l'élément d'entraînement (74), ou dans lequel la section transversale dudit au moins un élément d'entraînement (74) comprend au moins une première arête et au moins une deuxième arête, dont la distance entre elles détermine la plus grande extension de l'élément d'entraînement (74),
**caractérisé en ce que**
la section transversale dudit au moins un élément d'entraînement (74) comprend au moins un troisième sommet (S₃) et un quatrième sommet (S₄), dont la distance entre eux est inférieure à la distance entre le premier sommet (S₁) ou la première arête et le deuxième sommet (S₂) ou la deuxième arête.

2. Ensemble d'entraînement (38, 24) selon la revendication 1,
dans lequel ledit au moins un évidement d'entraînement (42) s'élargit vers l'extérieur ou vers l'intérieur dans la direction radiale pour définir l'ouverture d'entrée pour ledit au moins un élément d'entraînement (74).

3. Ensemble d'entraînement (38, 24) selon l'une quelconque des revendications précédentes,
dans lequel l'axe de rotation (D) du dispositif d'entraînement (38) s'étend à travers ou le long dudit au moins un élément de maintien (94).

4. Ensemble d'entraînement (38, 24) selon l'une quelconque des revendications précédentes,
dans lequel ledit au moins un élément de maintien (94) comprend, au moins sur une partie, une courbure qui est adaptée à la courbure dudit au moins un évidement de maintien (94).

5. Ensemble d'entraînement (38, 24) selon l'une quelconque des revendications précédentes,
dans lequel ledit au moins un élément d'entraînement (74) et ledit au moins un élément de maintien (94) sont reliés entre eux par au moins un élément de liaison (90, 92).

6. Ensemble d'entraînement (38, 24) selon l'une quelconque des revendications précédentes,
dans lequel ledit au moins un élément d'entraînement (74) et ledit au moins un élément de maintien (94) s'étendent sensiblement parallèlement à l'axe de rotation (D) du dispositif d'entraînement (38).

7. Ensemble d'entraînement (38, 24) selon l'une quelconque des revendications précédentes,
dans lequel ledit au moins un élément d'entraînement (74) présente une section transversale ovale, ellipsoïdale ou lenticulaire.
